# EUROPEAN PATENT APPLICATION

(11) **EP 4 733 819 A1**
(43) Date of publication of application: **29.04.2026**
(21) Application number: 24472016.5
(22) Date of filing: 24.10.2024
(51) Int. Cl.: G02B 6/12, G02B 6/122, G02B 6/125, G02B 6/126, G02B 6/14, G02B 6/27, G02B 6/28, G02B 6/30

(54) **A CONVERTER STRUCTURE AND METHOD FOR HORIZONTAL COUPLING OF LIGHT**

(71) Applicant: Axinora Ltd., 8600 Yambol (BG)
(72) Inventor: Georgieva, Galina Doneva, 8600 Yambol (BG)
(74) Representative: Nikolov, Vladislav Zdravkov

(57) **Abstract**

The invention refers to a method for coupling of waveguides, providing simultaneous interfacing and polarization and mode conversion between waveguides supporting modes and polarization states with similar or substantially different characteristics, and to a chip (100) comprising a converter structure, and to such converter structure. The invention merges functionalities of mode spot size conversion, mode coupling and transfer, mode type conversion, polarization conversion/rotation and polarization splitting. The converter structure is based on vertically stacked waveguides forming a vertical directional coupler (1) connected with different polarization branches (8) integrated into the chip (100).

## Description

### Technical Field

The general technical field relates to photonic and electronic-photonic integrated circuits and, more particularly, to the interfacing to or between integrated optical waveguides.

### Background

The contemporary optical communication systems unite two powerful functional blocks to achieve ultimate performance. On one hand, there is the superior computational capability of electronic integrated circuits (ICs), which build the backbone of all advanced computing systems. On the other hand, the information exchange between these computing systems is enabled by optical fiber links. Logically, an auxiliary subsystem such as an electro-optic converting unit is necessary to connect the electronic computational devices with the optic communication channel. Optoelectronic transmitters, receivers or transceivers play the role of such mediators. Much of today's effort is dedicated to make such auxiliary subsystems as small and fast, as possible. The key to achieve that is the integration of the elements of these subsystems on a common substrate. One speaks in such a case of photonic and electronic-photonic integrated circuits (PICs and EPICs). One of the most attractive technologies to realize such integrated circuits is silicon photonics, which relies on the same material platform and fabrication routines as those of the electronic ICs used for computing. The merging of all photonic and electronic functional units on the same platform enables the realization of the smallest optical communication subsystems at the lowest cost. Still, (E)PICs based on silicon have to address some non-trivial problems. Among them, the interfacing between the (E)PICs and the fiber optical link or the laser is of major importance. The latter generally requires a transformation in mode spot size and polarization, whereat the term mode describes the field pattern within a waveguide, being classified in mode types referring to a characteristic field component (e.g. transverse electric or transverse magnetic) with a certain mode order defined by indices assigning the number of field half-waves in given direction of the waveguide's cross-section. Further the term polarization assigns the electric field vector oscillation direction within the waveguide. Said interface has to deliver mode spot size and polarization matching capabilities. The spot size mismatch is given by the different material systems used for the fabrication of optical fibers or lasers and integrated silicon waveguides. Optical fibers are based on a low refractive index contrast technology, a single mode fiber has a core diameter of about 10 µm. By contrast, integrated waveguides mostly rely on the silicon-on-insulator (SOI) high refractive index contrast technology, which enables the realization of very tiny waveguides with a core area of about 0.1 µm². A coupling interface between an integrated waveguide and an optical fiber or laser must deliver mode spot size converting capabilities. The second issue is posed by the different polarization guiding properties of integrated waveguides and optical fibers. While standard single-mode fibers (SMFs) are circular and support two orthogonal degenerated polarization states (LP₀₁ₓ, LP_{01y}, LP is linear polarization, and x and y representing a horizontal and vertical axis), integrated SOI waveguides are rectangular (e.g. height x width = 220 nm × 500 nm) and have two birefringent polarization states with different parameters (a fundamental transverse electric mode TE₀₀ having an x-polarization, a fundamental transverse magnetic mode TM₀₀ having a y-polarization). Due to the strong birefringence, most integrated components are designed only for TE₀₀ (having an x-polarization). A coupling interface between an SOI waveguide and a SMF must provide polarization matching and polarization splitting capabilities.

There are two widespread techniques to realize integrated coupling interfaces between integrated waveguides and optical fibers. The first one relies on nearly *vertical coupling,* in which the light originating from an external source (e.g. a standard SMF) is directed nearly vertically with respect to the chip's surface. Two-dimensional diffraction gratings (2D grating couplers) are used as an interface structure for simultaneous coupling and polarization splitting into two waveguides supporting TE₀₀. This kind of coupling interfaces offers an excellent polarization splitting functionality with a very low polarization dependence and crosstalk, but is limited in the maximally achievable coupling efficiency and optical bandwidth. The second coupling method is based on *horizontal coupling* interface structures, in which the external light radiation is directed parallel to the light propagation direction within the chip. Typical horizontal coupling interfaces couple LP₀₁ₓ, LP_{01y} into TE₀₀, TM₀₀ within the same SOI waveguide, using edge or evanescent coupling techniques to realize a spot size converter. Following that, TE₀₀ and TM₀₀ are separated from each other and TM₀₀ is converted into TE₀₀ by a dedicated structure often called polarization splitter rotator (PSR). Horizontal coupling structures requiring a spot size converter and the following polarization splitter rotator are thus more complex and have a larger total footprint (total length, resp. total area of the structure) for coupling and polarization splitting and rotation, which makes their use more costly. In addition, small feature sizes are often necessary, making the fabrication of such couplers especially designed for short wavelengths very challenging and costly. In spite of their good coupling efficiency and large optical bandwidth, a good polarization splitting is difficult to achieve. Interfacing to a standard SMF requires non-trivial fabrication methods.

In the following, several state-of-the-art devices, hereafter referred to as prior art devices, and their features will be summarized.

US20150247974A1 discloses a spot size converter for horizontal coupling, formed by a vertical directional coupler with different coupling waveguide sections, including a plurality of thin high index contrast sheets/rods. Thin highly stressed sheets/rods have potential mechanical stability issues. A device comprising such thin sheets/rods suffers from higher sensitivity towards fabrication deviations. Furthermore, US20150247974A1 requires the use of subwavelength (sometimes called metamaterial) tapers having very small feature sizes. This requires the use of expensive fabrication technologies and tools. Subwavelength (i.e. metamaterial) structures are more difficult to fabricate on a large scale. Lastly, US20150247974A1 offers no functionality for polarization splitting and rotation (i.e. conversion).

US8238704B2 discloses a system in which an auxiliary medium or auxiliary structures for mode expansion or electromagnetic energy coupling are used, namely a glass injector. Other embodiments may use for instance an external glass interposer/cantilever, a polymer, and others. Such auxiliary structures/media may necessitate elaborate fabrication or post-processing. US8238704B2 is further not providing polarization splitting and rotation (i.e. conversion) capabilities.

In US20180239088A1, a polarization splitter rotator structure is disclosed, which may be used as a part of horizontal coupling devices combining mode spot size converters followed by polarization splitters rotators. In such devices incoming x- and y-polarized light is first coupled into TE₀₀ and TM₀₀ within the same waveguide using the spot size converter unit. After the coupling procedure is completed, the subsequent separation (splitting) and rotation (polarization conversion) of TM₀₀ follows within the polarization splitter rotator unit, typically by making use of mode hybridization in the integrated waveguides of this structure (e.g. applying the sequence TM₀₀→ higher-order transverse electric mode, typically TE₁₀→TE₀₀ as in D. Dai, J. E. Bowers, Opt. Express 19 (11), pp. 10940-10949 (2011), doi: 10.1364/OE.19.010940) or the mode decomposition into two hybrid modes using L-shaped asymmetric waveguide structures (e.g. Z. Wang, D. Dai, JOSA B 25 (5), pp. 747-753 (2008), doi: 10.1364/JOSAB.25.000747). Polarization splitting and rotation is not provided within the spot size converter unit. Thus, the complete system footprint comprises the lengths of the mode coupling section (required for TE₀₀ and TM₀₀) and the polarization splitting/rotation section for TM₀₀ and may become very large. Furthermore, the polarization splitting (i.e. polarization separation) and polarization rotation in such devices typically comes with significant issues such as excess insertion loss, polarization non-orthogonality, polarization dependent loss and polarization crosstalk. Such issues are critical in (E)PICs comprising optoelectronic receivers and transceivers.

US20160356958A1 discloses a fabrication procedure of a structure for light transportation between photonic layers, resp. waveguides at different vertical locations within a chip. Such structures typically operate with fundamental modes and require feature sizes, which become critically small with decreasing wavelength. In addition, such structures typically do not provide a capability for polarization rotation and mode spot size conversion between modes with substantially different dimensions (i.e. mode field diameters).

### Summary of the invention

The task of the present invention is to provide an optimized converter structure for interfacing between waveguides, and a photonic or electronic-photonic integrated circuit realized on a carrying substrate, for example a semiconductor chip, with such converter structure, which solves the issues of the prior art, described herein.

This task is solved by creating the present invention, which offers a method and a converter structure for light transportation, which can be used for simultaneous horizontal coupling and polarization splitting and/or rotation. A horizontal coupling interface based on a such converter structure shows improved characteristics. The converter structure uses auxiliary higher-order modes, used for mode spot size conversion and for mode type conversion, and/or auxiliary hybrid modes, used for mode spot size conversion, for mode type conversion and for polarization rotation, to couple an x- and/or y-polarized electromagnetic wave to/from an (E)PIC. Different polarization states (polarization components) can be handled in different polarization branches, designed for different operating points to avoid polarization splitting issues, such as polarization dependent loss, polarization non-orthogonality and polarization crosstalk. Furthermore, a given polarization branch, e.g. the y-polarization branch, can be operated in a mode hybridization point (operating point used for change of polarization), which allows simultaneous mode spot size conversion and polarization conversion (i.e. rotation) functionality. The said polarization branch has a shorter length, compared to known solutions, which perform mode spot size conversion and polarization rotation in separate devices following each other. Lastly, the invention provides larger freedom in the choice of an operating point, which allows to realize elements of the converter structure, having much larger critical dimensions, thus allowing easier and cheaper fabrication and an improved robustness against fabrication deviations.

More particularly, the task of the invention is solved by creating a converter structure, configured for horizontal coupling of light, comprising a vertical directional coupler, comprising at least two coupling section waveguides which are spatially distanced from each other, and vertically stacked over each other and coupled with each other via evanescent fields, wherein said vertical directional coupler is connected to at least one routing waveguide, wherein each coupling section waveguide has a core and a first access side A, which is opposed to a second access side B, and each routing waveguide has a core and a first access side A', which is opposed to a second access side B'.

Said vertical directional coupler has one or more polarization branches, each formed by one of the coupling section waveguides within the vertical directional coupler and the at least one routing waveguides connected to said coupling section waveguide, wherein the other coupling section waveguides are configured to deliver light with optical power to said one or more polarization branches.

The converter structure is configured for mode type conversion assisted by the use of auxiliary higher-order modes and/or auxiliary hybrid modes different from fundamental modes within one coupling section waveguide of at least one polarization branch, wherein the one or more polarization branches are configured for direct or indirect coupling of x-polarization state and/or y-polarization state, wherein a source x-polarized mode is connected to a target x-polarized or y-polarized mode and/or a source y-polarized mode is connected to a target x-polarized or y-polarized mode.

The converter structure is configured for spot size conversion by the use of auxiliary higher-order modes and/or auxiliary hybrid modes different from fundamental modes within a coupling section waveguide of at least one polarization branch, wherein each coupling section waveguide is a high refractive index contrast coupling section waveguide or a low refractive index contrast coupling section waveguide, and each routing waveguide is a high refractive index contrast routing waveguide or a low refractive index contrast routing waveguide, wherein routing waveguides and coupling section waveguides, which are directly connected with each other, have the same refractive index contrast.

In a preferred embodiment of the invention, the mode type conversion is a polarization rotation assisted by the use of auxiliary hybrid modes different from fundamental modes within a coupling section waveguide of at least one polarization branch, wherein a source x-polarized mode is connected to a target y-polarized mode and/or a source y-polarized mode is connected to a target x-polarized mode.

In a preferred embodiment of the invention, the vertical directional coupler is connected to a group of at least two subsequently arranged routing waveguides, wherein the configuration of the subsequent routing waveguides is either configured to have the same height and to follow each other in sequence; or two or more of the subsequent routing waveguides with equal or different height are configured to form a routing directional coupler; or two or more of the subsequent routing waveguides are configured to have different heights and to follow each other in sequence.

In a preferred embodiment of the invention, the vertical directional coupler has two or more polarization branches.

In a preferred embodiment of the invention, at least one coupling section waveguide and at least one routing waveguide are tapered for broadband matching between the source modes and the auxiliary higher-order modes or the auxiliary hybrid modes and between the target modes and the auxiliary higher-order modes or the auxiliary hybrid modes.

Preferably, at least one of the access sides A, B of one coupling section waveguide has equal or different dimensions with at least one of the access sides A, B of an adjacent coupling section waveguide, wherein at least one coupling section waveguide is a high refractive index contrast waveguide and at least one another coupling section waveguide is a bulky low refractive index contrast coupling section waveguide, wherein the bulky low refractive index contrast coupling section waveguide has a core cross-section area, which is at least one order of magnitude larger than the core cross-section area of one of said at least one high refractive index contrast coupling section waveguide, wherein the mode spot size conversion is between waveguides with different dimensions.

In a preferred embodiment of the invention, at least one bulky low refractive index contrast coupling section waveguide is placed below or above a high refractive index contrast coupling section waveguide. In case there are two or more high refractive index contrast coupling section waveguides, some of them can be placed below a bulky low refractive index contrast coupling section waveguide, and the rest of them can be placed above a bulky low refractive index contrast coupling section waveguide.

In one embodiment of the invention, a polarization branch configured for the coupling of an x-polarized source mode comprises at least one coupling section waveguide within the vertical directional coupler, which is tapered to receive a source x-polarized mode into a line of at least one auxiliary higher-order transverse electric mode, wherein the latter in the line auxiliary higher-order transverse electric mode is converted into a target x-polarized fundamental transverse electric mode by the use of at least one routing waveguide.

In one embodiment of the invention, a polarization branch configured for the coupling of an y-polarized source mode comprises at least one coupling section waveguide within the vertical directional coupler, which is tapered around a mode hybridization point between a y-polarized fundamental transverse magnetic mode and an x-polarized auxiliary higher-order transverse electric mode, and in said hybridization point simultaneously the source y-polarized mode is coupled and rotated and converted into the x-polarized auxiliary higher-order transverse electric mode.

In a preferred embodiment of the invention, the converter structure is configured for polarization splitting by the spatial separation in different polarization branches and by the use of different operating points within each polarization branch for all polarization states, which are coupled to the converter structure.

In a preferred embodiment of the invention, the converter structure is integrated in a chip as a horizontal integrated coupling interface, and is a part of an integrated photonic or electronic-photonic integrated circuit.

In another embodiment of the invention, the light of the external light source is composed of up to two orthogonal polarization states, wherein photonic layers, comprising coupling section waveguides of a vertical directional coupler or a combination of coupling section waveguides of vertical directional coupler and routing waveguides are arranged in different vertical layers, beginning at different vertical locations, either in the frontend of line of the chip or in the backend of line of the chip, wherein mode spot size conversion and polarization splitting is obtained from:
- coupling of x- and y-polarization states into two polarization branches placed in sequence at the same photonic layer or at different vertical photonic layers, or
- coupling of x- and y-polarization states into two parallel polarization branches at the same photonic layer, or
- coupling of x- and y-polarization states into two parallel polarization branches at different vertical photonic layers.

In one embodiment of the invention, a tapered high refractive index contrast coupling section waveguide within the vertical directional coupler, which is configured to transport an auxiliary higher-order mode, is connected to a first high refractive index contrast routing waveguide, which is straight or tapered or bent,
- wherein the first high refractive index contrast routing waveguide is followed by a second high refractive index contrast routing waveguide, which is tapered, for width adaptation,
- wherein a third high refractive index contrast routing waveguide follows the second high refractive index contrast routing waveguide, which third high refractive index contrast routing waveguide having equal or different width compared to the first high refractive index contrast routing waveguide,
- wherein the third high index contrast routing waveguide is placed in parallel to a fourth high refractive index contrast routing waveguide,
- wherein the third and the fourth high refractive index contrast routing waveguides form a routing directional coupler for height and/or mode transformation,
- wherein the auxiliary higher-order mode from the third high refractive index contrast routing waveguide is matched and evanescently coupled and transferred to a target fundamental transverse electric mode in the fourth high refractive index contrast routing waveguide,
- wherein the high refractive index contrast fourth waveguide is connected to an electronic-photonic or photonic integrated circuit.

According to the invention, also a method for horizontal coupling of waveguides using a converter structure is created, having the following steps:
- a light source provides light with optical power, which has either a fixed polarization state or is composed of two orthogonal polarization states, wherein light with different polarization states is separated and coupled in different polarization branches having different operating points to achieve polarization splitting;
- said light with optical power is transferred directly or indirectly (i.e. by direct light deflection or by indirect light deflection) using an auxiliary medium or structure for light guiding and/or light deflection towards the edge or parallel to the surface of a chip with integrated photonic or electronic-photonic integrated circuit, containing the converter structure having vertical directional coupler, formed by coupling section waveguides, and connected to routing waveguides for forming one or more polarization branches, by leading the external light with optical power through a low index contrast coupling section waveguide to one or more high or low index contrast coupling section waveguides or through a high index contrast coupling section waveguide to one or more high or low index contrast coupling section waveguides in the vertical directional coupler located within photonic layers at a lower and/or higher vertical position, wherein the light with optical power is transferred through one or more auxiliary higher-order modes and/or auxiliary hybrid modes between a source mode and a target mode, wherein mode matching is ensured for all wavelengths within the target spectrum.

Preferably, the light with optical power is transferred using a mode hybridization point within the spot size converting structure, wherein a source y-polarization state is simultaneously coupled to an auxiliary hybrid mode between a fundamental transverse magnetic mode and an auxiliary higher-order transverse electric mode and rotated and converted into a target x-polarized fundamental transverse electric mode and/or the light with optical power is transferred through one or more auxiliary higher-order transverse electric modes between a source x-polarized mode and a target x-polarized fundamental transverse electric mode.

The structure according to the invention has relaxed fabrication demands, due to the larger waveguide dimensions, which are necessary to support the coupling and propagation of auxiliary higher-order modes and auxiliary hybrid modes. The structure can couple and split different polarization states with low polarization dependent loss, low polarization non-orthogonality and low polarization crosstalk. This can be achieved by the use of different polarization branches for each said polarization state, and the geometric design of each polarization branch to operate in a different operating point. The structure can act as an improved mode spot size converter between waveguides with different dimensions, thus achieving coupling between an integrated silicon waveguide and an optical fiber with a large mode field diameter (e.g. > 6 µm). Thus, the structure is also capable of interfacing to a standard SMF. This can be achieved by using low index contrast waveguides having a bulky cross-section. In addition, a bulky low refractive index waveguide has better fabrication tolerances and improved mechanical stability characteristics. It also requires no complex fabrication or post-fabrication processing, as one may use SiO₂-layers typically deposited in the chip's BEOL. It also may act as an intermediate transporting medium between different photonic layers, thus reducing the sensitivity to fabrication deviations of such devices for the connection of different vertical layers.

Further, the converter structure maintains high coupling efficiency for the coupling and guiding of any mode and polarization state, as polarization splitting, mode conversion and/or polarization rotation do not come with excess loss. In addition, the use of adiabatically tapered waveguides allows for a large optical bandwidth (broadband operation possible).

Although the provided method and converter structure are motivated by fiber coupling issues, their function can be extended and applied to other problems. Naturally, the coupling to other light emitters, such as external lasers, or light guides other than optical fibers can be considered. In such cases, the handling of only one polarization state may be necessary. The converter structure can be used as a mode spot size converter for interfacing between different material sub-systems, e.g. to achieve III-V materials to silicon coupling, or as a supporting device for the light transfer between different vertical photonic layers within a 3D photonic platform. In addition, the polarizations and modes between these vertical photonic layers can be transformed. Furthermore, the converter structure can couple an arbitrary number of modes and/or polarizations with a given ratio for multimode photonics, necessary for applications such as four-wave-mixing, sensing, etc. The method and converter structure will also be relevant for the application of photonics to multi-chiplet microelectronics packaging.

### Brief Description of the Drawings

Herein below are shown figures giving exemplary embodiments of the invention, which are not limiting to the scope of the claims, wherein:

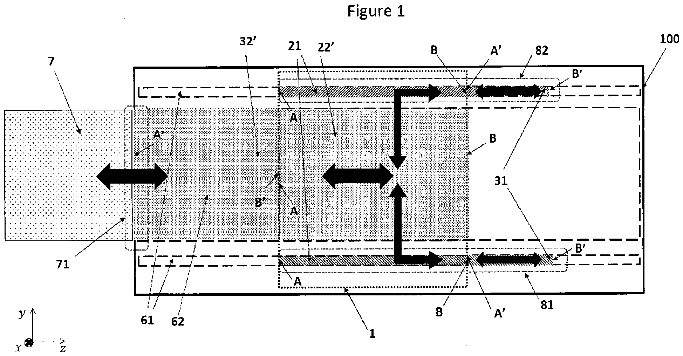

Figure 1 is a first example of a preferred configuration for edge coupling in longitudinal cross-section (x-cut). The illustration shows two polarization branches realized at two parallel high index contrast photonic layers at different vertical locations. A bulky low index contrast coupling section waveguide is sandwiched between both polarization branches.

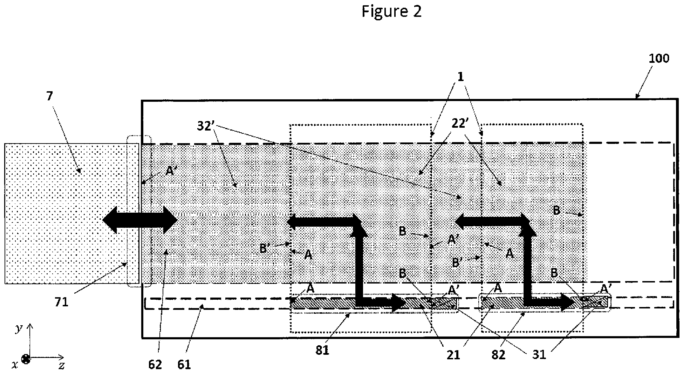

Figure 2 is a second example of a preferred configuration for edge coupling in longitudinal cross-section (x-cut). The illustration shows two (generally N) successive high index contrast polarization branches at the same photonic layer, which are placed below a bulky low index contrast coupling section waveguide at another photonic layer.

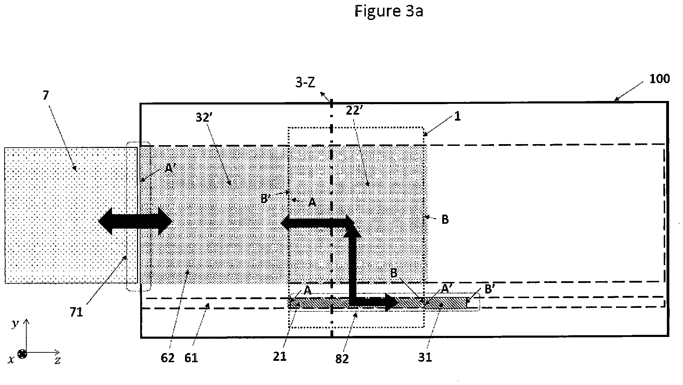

Figure 3a is a third example of a preferred configuration for edge coupling in longitudinal cross-section (x-cut). The illustration shows two (generally N) parallel high index contrast polarization branches at the same photonic layer, which are placed below a bulky low index contrast coupling section waveguide at another photonic layer. The cross-section is shown at a constant x-position, at which only one of both polarization branches (here the y-polarization branch) is visible.

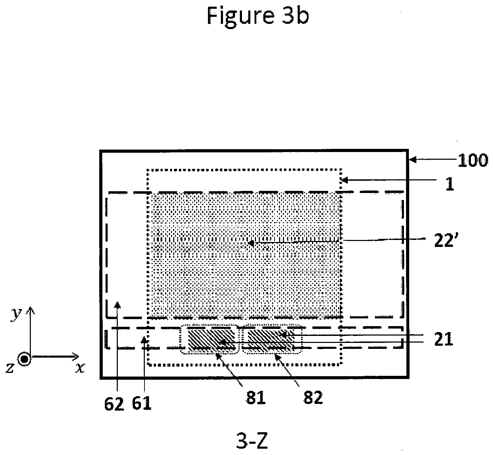

Figure 3b is the third example of a preferred configuration for edge coupling in lateral cross-section (z-cut) at the position 3-Z. Two parallel polarization branches at the same photonic layer, placed below a bulky low index contrast coupling section waveguide, are visible.

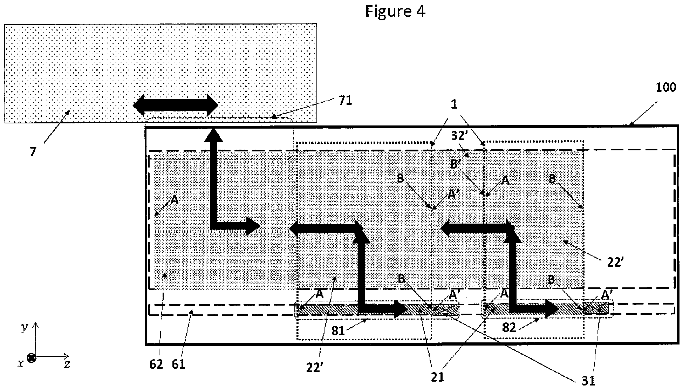

Figure 4 is a first example of a preferred configuration for evanescent coupling in longitudinal cross-section (x-cut). The illustration shows two (generally N) successive high index contrast polarization branches at the same photonic layer, which are placed below a bulky low index contrast coupling section waveguide at another photonic layer.

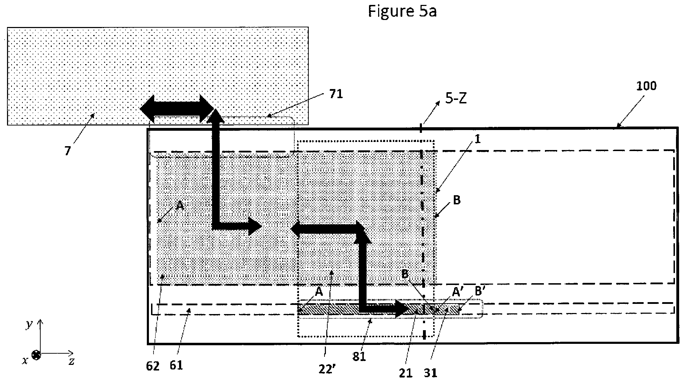

Figure 5a is a second example of a preferred configuration for evanescent coupling in longitudinal cross-section (x-cut). The illustration shows two (generally N) parallel high index contrast polarization branches at the same photonic layer, which are placed below a bulky low index contrast coupling section waveguide at another photonic layer. The cross-section is shown at a constant x-position, at which only one of both polarization branches (here the x-polarization branch) is visible.

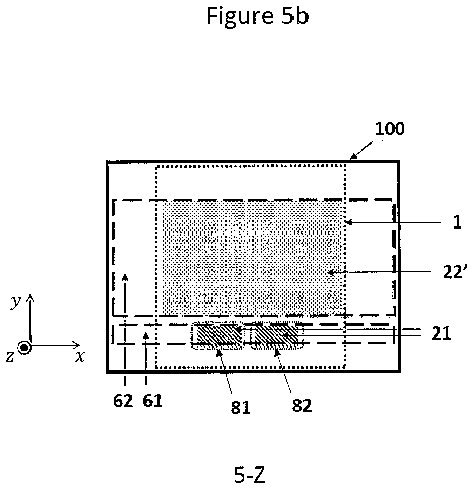

Figure 5b is the second example of a preferred configuration for evanescent coupling in lateral cross-section (z-cut) at the position 5-Z. Two parallel polarization branches at the same photonic layer, placed below a bulky low index contrast coupling section waveguide, are visible.

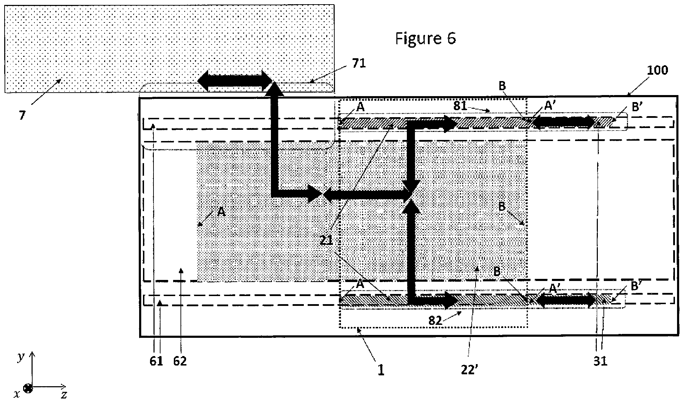

Figure 6 is a third example of a preferred configuration for evanescent coupling in longitudinal cross-section (x-cut). The illustration shows two polarization branches realized at two parallel high index contrast photonic layers at different vertical locations. A bulky low index contrast coupling section waveguide is sandwiched between both polarization branches. The external light is evanescently coupled to the bulky low index contrast coupling section waveguide.

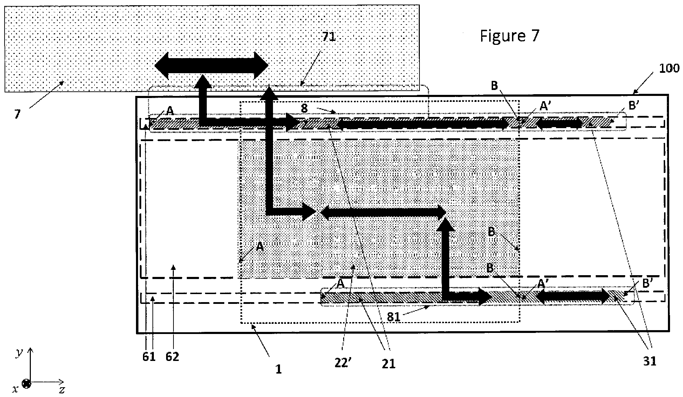

Figure 7 is a fourth example of a preferred configuration for evanescent coupling in longitudinal cross-section (x-cut). The illustration shows two polarization branches realized at two parallel high index contrast photonic layers at different vertical locations. A bulky low index contrast coupling section waveguide is sandwiched between both polarization branches. The external light is evanescently coupled to both the bulky low index contrast coupling section waveguide and the polarization branch at the highest vertical position.

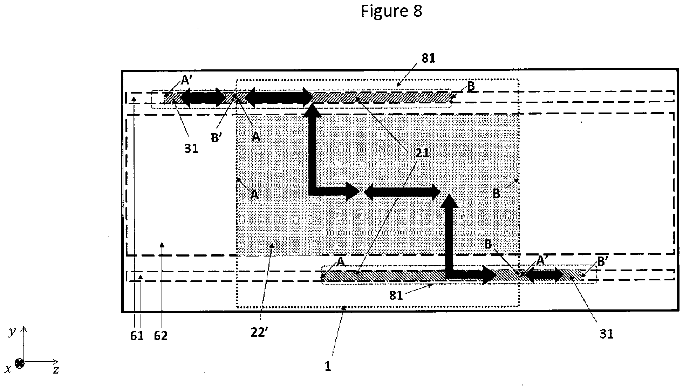

Figure 8 is a fifth example of a preferred configuration for evanescent coupling in longitudinal cross-section (x-cut). The illustration shows two polarization branches at two parallel photonic layers placed at different vertical locations and a bulky low index contrast coupling section waveguide sandwiched between them. In this example, the highest polarization branch is a source x-polarization branch and the lowest polarization branch is a target x-polarization branch. The light is guided from the highest to the lowest photonic layer, using the low index contrast coupling section waveguide as a supporting medium.

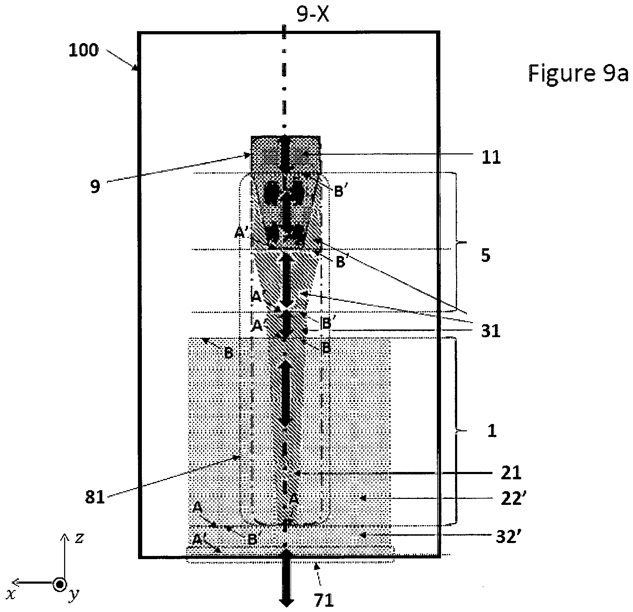

Figure 9a is a first example of a preferred configuration of an x-polarization branch for direct coupling of an x-polarized light into the fundamental transverse electric mode (e.g. TE₀₀) of an integrated waveguide (y-cut top-view). The example shows the x-polarization branch within an edge coupling scheme. The high index contrast x-polarization branch receives light from a bulky low index contrast coupling section waveguide within a vertical directional coupler. The illustration shows two different vertical photonic layers in a layout-like representation. High index contrast routing waveguides with different heights are shown with different patterns. Height adaptation and mode coupling via double-tip taper is illustrated.

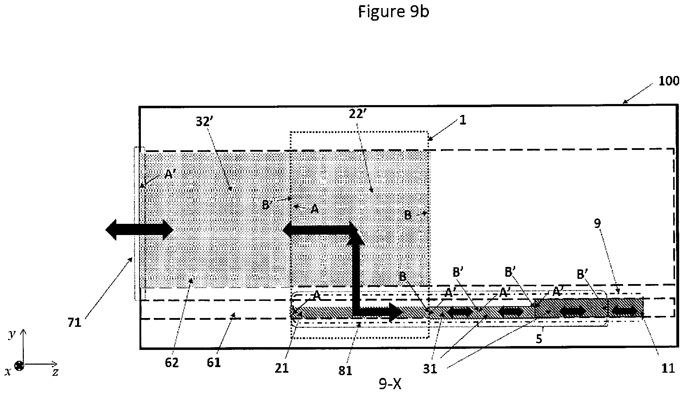

Figure 9b is the first example of a preferred configuration of an x-polarization branch for direct coupling of an x-polarized light into the fundamental transverse electric mode (e.g. TE₀₀) of an integrated waveguide shown in longitudinal cross-section (x-cut) at the polarization branch's symmetry axis. The example shows an x-polarization branch within an edge coupling scheme.

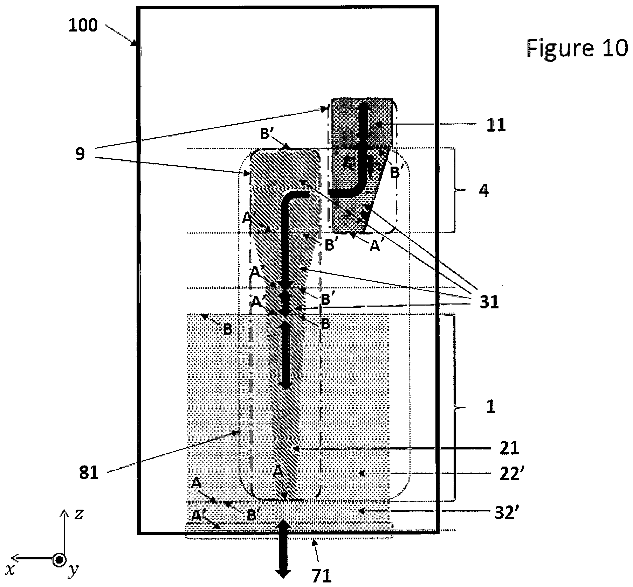

Figure 10 is a second example of a preferred configuration of an x-polarization branch for direct coupling of an x-polarized light into the fundamental transverse electric mode (e.g. TE₀₀) of an integrated waveguide (y-cut top-view). The example shows the x-polarization branch within an edge coupling scheme. The high index contrast x-polarization branch receives light from a bulky low index contrast coupling section waveguide within a vertical directional coupler. The illustration shows two different vertical photonic layers in a layout-like representation. High index contrast routing waveguides with different heights are shown with different patterns. Height adaptation and mode coupling via routing directional coupler with routing waveguides at the same photonic layer and, in general, with different heights is shown.

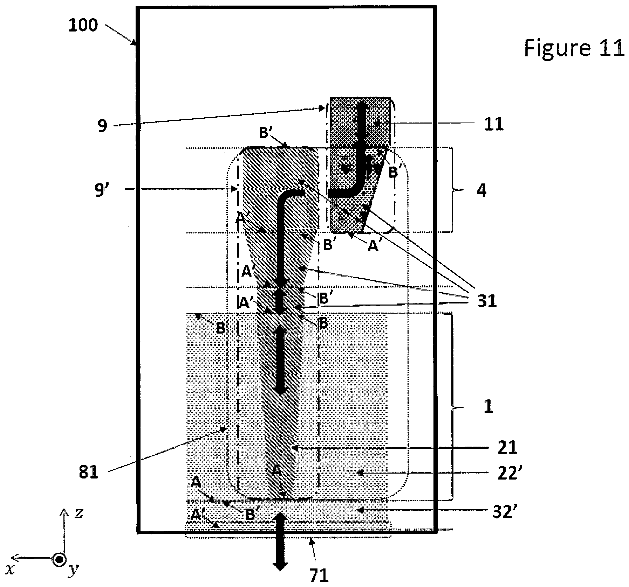

Figure 11 is a third example of a preferred configuration of an x-polarization branch for indirect coupling of an x-polarized light into the fundamental transverse electric mode (e.g. TE₀₀) of an integrated waveguide (y-cut top-view), using auxiliary higher-order transverse electric modes (e.g. TE₂₀) within a high index contrast coupling section waveguide. The example shows the x-polarization branch within an edge coupling scheme. The high index contrast x-polarization branch receives light from a bulky low index contrast coupling section waveguide within a vertical directional coupler. The illustration shows two different vertical photonic layers in a layout-like representation. High index contrast routing waveguides with different heights are shown with different patterns. Height adaptation and mode coupling via routing directional coupler with routing waveguides at the same photonic layer and, in general, with different heights is shown.

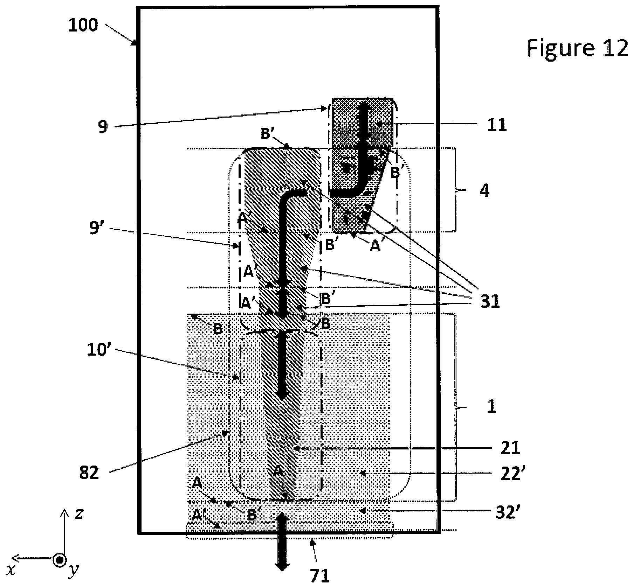

Figure 12 is a first example of a preferred configuration of a y-polarization branch for indirect coupling and rotation of a y-polarized light into the fundamental transverse electric mode (e.g. TE₀₀) of an integrated waveguide (y-cut top-view), using auxiliary hybrid modes and auxiliary higher-order modes. A high index contrast coupling section waveguide is operated in a hybrid mode regime and receives light in the sequence: source y-polarization - > auxiliary hybrid mode -> auxiliary higher order transverse electric mode, e.g. y-polarization -> TM₀₀/TE₁₀ -> TE₁₀. The example shows the y-polarization branch within an edge coupling scheme. The high index contrast y-polarization branch receives light from a bulky low index contrast coupling section waveguide within a vertical directional coupler. The illustration shows two different vertical photonic layers in a layout-like representation. High index contrast routing waveguides with different heights are shown with different patterns. Height adaptation and mode coupling via routing directional coupler with routing waveguides at the same photonic layer and, in general, with different heights is shown.

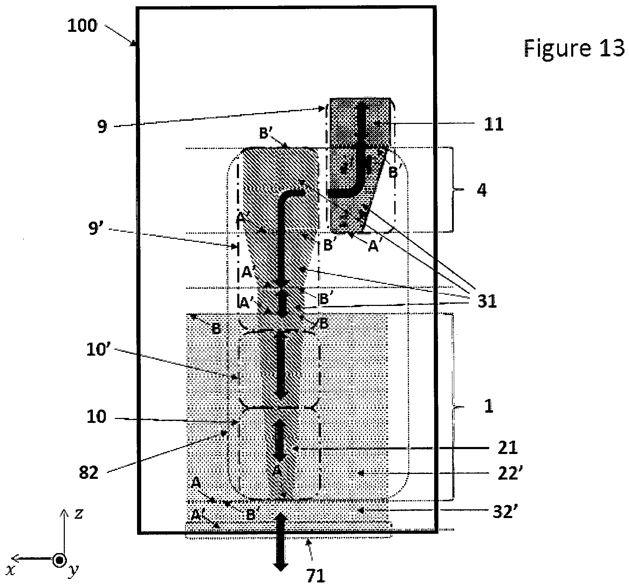

Figure 13 is a second example of a preferred configuration of a y-polarization branch for indirect coupling and rotation of a y-polarized light into the fundamental transverse electric mode (e.g. TE₀₀) of an integrated waveguide (y-cut top-view), using auxiliary higher-order modes and auxiliary hybrid modes. A high index contrast coupling section waveguide is operated in a hybrid mode regime and receives light in the sequence source y-polarization -> fundamental transverse magnetic mode - > auxiliary hybrid mode -> auxiliary higher order transverse electric mode, e.g. y-polarization -> TM₀₀ -> TM₀₀/TE₁₀ -> TE₁₀. The example shows the y-polarization branch within an edge coupling scheme. The high index contrast y-polarization branch receives light from a bulky low index contrast coupling section waveguide within a vertical directional coupler. The illustration shows two different vertical photonic layers in a layout-like representation. High index contrast routing waveguides with different heights are shown with different patterns. Height adaptation and mode coupling via routing directional coupler with routing waveguides at the same photonic layer and, in general, with different heights is shown.

### Exemplary embodiments of the invention

The present invention is described below with non-limiting the scope of the claims embodiments.

Depending on the particular application, the disclosed according to the invention converter structure may be composed of different elements, combined in various ways to achieve specific target metrics.

Before the basic principle of the disclosed invention is explained, some frequently used terms will be first defined. For the description of a waveguide, the term "waveguide axis" assigns the longitudinal orientation of this waveguide. The waveguide axis points in the same direction, in which an electromagnetic wave propagates and transports power through the waveguide. Transversal axes are the two orthogonal axes of a coordinate system, which are orthogonal to the direction of wave propagation. The waveguide's transversal cross-section is thus defined by the plane, spanned by these two transversal axes. In a waveguide-local Cartesian coordinate system, the waveguide axis may be identified with the z-axis, and the transversal axes are the x- and y-axes. Often, there is interest in electromagnetic waves with electric fields polarized along the transversal axes. Therefore, according to the invention, it is assigned as an x-polarization, a field component polarized along the horizontal transverse axis, and as a y-polarization, a field component polarized along the vertical transverse axis. To describe the material composition of a waveguide, the terms "refractive index contrast" or short "index contrast" are used. For a waveguide with a field-confining area made of material having refractive index n₁ and a surrounding cladding material with the refractive index n₂, the refractive index contrast or relative refractive index difference is defined as: (n₁-n₂)/n₁ (cf. E. Voges, K. Petermann, Optische Kommukationstechnik, Springer 2002, p. 326).

When speaking of the geometry of integrated waveguides, there are two most common cross-sections, which will be considered. In the simplest case, the cross-section is quadrangular - square-shaped or rectangular-shaped, the waveguide is here called nanowire, wire (i.e. channel) waveguide or slab waveguide. The high index material forms a waveguide core. Alternatively, an integrated waveguide may have a rib cross-section, i.e. the high index material has a thicker part centered at the middle point of the total waveguide width - a rib core in combination with two thinner parts on the left and right-hand side - slabs. The slabs are characterized by their height, which may differ by less or more than half of the core height. In the former case it is meant shallowly etched rib waveguides, in the latter case - deeply etched rib waveguides. The disclosed method, converter structure and a chip 100 with such converter structure can be applied to waveguides with other material composition and geometry, and in different wavelength/frequency ranges, as long as the waveguides have similar mode guiding properties and mode effects.

The vertical level within the integrated platform, at which an optical waveguide is located, is called a photonic layer 6. A photonic layer can be fabricated in both the frontend of line (FEOL) and the backend of line (BEOL). (Note: Frontend of line and backend of line refer to semiconductor chip fabrication processes, wherein during the frontend processing components such as transistors are formed, while during the backend processing the interconnects between these components are formed.) A photonic layer 6, comprising only low index, resp. high index contrast waveguiding structures, is called a low index contrast photonic layer 62, resp. high index contrast photonic layer 61.

The converter structure according to the invention is used for horizontal coupling of light and comprises a vertical directional coupler 1 with two or more coupling section waveguides 2 which are spatially distanced from each other, and vertically stacked over each other and coupled with each other via evanescent fields. Said vertical directional coupler 1 is connected to one or more routing waveguides 3, wherein the routing waveguides 3 can be connected to each of both sides of the vertical directional coupler 1, i.e. before or after it, and also it is possible two or more routing waveguides 3 to be arranged subsequently one after the other both before or after the vertical directional coupler 1. The configuration of the subsequent routing waveguides 3 is either configured to have the same height and to follow each other in sequence; or two or more of the subsequent routing waveguides 3 with equal or different height are configured to form a routing directional coupler 4; or two or more of the subsequent routing waveguides 3 are configured to have different heights and to follow each other in sequence. Each coupling section waveguide 2 has a core and a first access side A, which is opposed to a second access side B, and each routing waveguide 3 has a core and a first access side A', which is opposed to a second access side B'. Said vertical directional coupler 1 has one or more polarization branches 8, preferably two polarization branches 8 or more polarization branches 8, which are formed by one of the coupling section waveguides 2 within the vertical directional coupler 1 and the routing waveguides 3 connected to the coupling section waveguide 2, wherein the other coupling section waveguides 2 deliver light with optical power to each polarization branch 8. Each coupling section waveguide 2 within a polarization branch 8 is connected to a routing waveguide 3.

In a basic configuration, the converter structure is enabled by a section of at least two waveguides, which waveguides are vertically stacked over each other, have a vertical spatial distance from each other, and form a vertical directional coupler 1. A waveguide belonging to such a vertical directional coupler 1 is assigned as a coupling section waveguide 2. Coupling section waveguides 2 exchange electromagnetic energy and power with each other via evanescent coupling, i.e. without physical contact in-between them. A coupling section waveguide 2 is also a waveguide, which receives chip-external light radiation evanescently. The light radiation is an optical signal having a certain optical power (here, the terms "electromagnetic wave", "light", "light/optical radiation", "light/optical signal", "light/optical power" are used in an equivalent sense). Each coupling section waveguide 2 may have the shape of a nanowire or rib structure, and has a core and a first access side A with a given core height and width, which is opposed to a second access side B of the same coupling section waveguide 2 with a given core height and width. Both access sides A and B can be used for inputting/outputting light radiation (electromagnetic waves) to or from other waveguiding structures. The core's height and width of access sides A and B can be different and gradually vary along the coupling section waveguide 2 during the transition from access side A to access side B. With other words, the top-view cross-section of a coupling section waveguide 2 may have a shape with symmetrical ends, or a shape of a taper, whereat the tapering may be described by a stepwise, linear, quadratic, exponential, or any other typical shape function. In rib-shaped waveguides, tapering may be achieved by gradually changing the width of the core of coupling section waveguide 2 or the total waveguide width. A potential height transition may be realized by a double-tip taper 5. The vertically stacked waveguides can be based on both high index contrast and low index contrast technology.

For accessing a coupling section waveguide 2 within the vertical directional coupler 1, waveguides, assigned here as routing waveguides 3 are necessary. Routing waveguides 3 are also called all waveguides, which are responsible for geometric and/or mode and/or polarization transformations between the vertical directional coupler 1 and the target (E)PIC 11. Each routing waveguide 3 can be shaped as a nanowire or rib structure and has a core and a first access side A' with given core height and width and a second access side B' with given core height and width. The core height and width of access sides A' and B' can be different. Routing waveguides 3 may also be curved along their waveguide axis, i.e. the top view of the waveguide reveals a bend shape. Both access sides A' and B' of a routing waveguide 3 can be used for inputting/outputting light radiation to or from the vertical directional coupler 1. In case that a coupling section waveguide 2 or a routing waveguide 3 is rib-shaped, their two access sides A and B or A' and B' may have generally different total widths, respectively slab widths, and different slab heights (resp. rib etch depths). Routing waveguides 3 may be also placed parallel to each other within the same photonic layer 6 with the purpose to achieve height transformation or mode transformation, or both. A configuration with at least two parallel routing waveguides 3 at the same vertical level is here called a routing directional coupler 4. Said vertical directional coupler 1 is connected to one or more routing waveguides 3, wherein the routing waveguides 3 can be connected to each of both sides of the vertical directional coupler 1, i.e. before or after it, and also it is possible two or more routing waveguides 3 to be arranged subsequently one after the other both before or after the vertical directional coupler 1. The configuration of the subsequent routing waveguides 3 is either configured to have the same height and to follow each other in sequence; or two or more of the subsequent routing waveguides 3 with equal or different height are configured to form a routing directional coupler 4; or two or more of the subsequent routing waveguides 3 are configured to have different heights and to follow each other in sequence.

A waveguiding segment comprising the combination of one coupling section waveguide 2 with the following one or more routing waveguides 3, which is dedicated to the coupling of a given source polarization state, is called a polarization branch 8, wherein the name of the polarization branch 8 is chosen after the assignment of the source polarization state (e.g. x-polarization branch 81 or y-polarization branch 82). Said vertical directional coupler 1 has one or more polarization branches 8, preferably two polarization branches 8 or more polarization branches 8, which are formed by one of the coupling section waveguides 2 within the vertical directional coupler 1 and the routing waveguides 3 connected to the coupling section waveguide 2, wherein the other coupling section waveguides 2 deliver light with optical power to each polarization branch 8. Each coupling section waveguide 2 within a polarization branch 8 is connected to a routing waveguide 3.

The connection between coupling section waveguides 2 and routing waveguides 3 can be made by connecting a first access side A of a coupling section waveguide 2 to a first access side A' of a routing waveguide 3, or by connecting a second access side B of a coupling section waveguide 2 to a second access side B' of a routing waveguide 3, or by connecting a first access side A of a coupling section waveguide 2 to a second access side B' of a routing waveguide 3, or by connecting a second access side B of a coupling section waveguide 2 to a first access side A' of a routing waveguide 3.

A coupling section waveguide 2 can be based on a high index contrast technology. The term "high index contrast technology" may refer to any waveguide composition, in which the refractive index contrast is equal or more than 5%. Exemplary waveguide compositions are formed of silicon, polysilicon, amorphous silicon, silicon nitride, aluminum nitride or other CMOS-compatible materials as a core (CMOS: complementary metal oxide semiconductor), surrounded by silicon dioxide as a cladding. The transversal cross-section of a high index contrast coupling section waveguide 21 may be formed in different ways, e.g. as a nanowire or rib structure. In both the case of a nanowire or a rib coupling section waveguide 2, the typical core dimensions at access side A or B do not exceed 1 µm in any direction. In rib waveguides, the slabs may be wider than 1 µm, the total waveguide width may be also wider than 1 µm. A high index contrast coupling section waveguide 21 can be accessed via a high index contrast routing waveguide 31, having the same typical shapes and dimensions.

Further, a coupling section waveguide 2 can be based on a low index contrast technology. The term "low index contrast technology" may refer to any waveguide composition, in which the refractive index contrast is less than 5%. An exemplary waveguide is formed by a silicon dioxide core and a different silicon dioxide cladding, whereat the silicon dioxides in the core and the cladding have refractive indices, which differ by the desired degree. Alternatively, the core may be made e.g. by a silicon oxynitride. The core material's refractive index preferably does not exceed 1,6. The cladding material's refractive index may be in the range 1,4 ÷ 1,5. The low index contrast coupling section waveguide 22 can be accessed by a low index contrast routing waveguide 32. In view of typical (E)PIC 11 fabrication routines, low index contrast coupling section waveguides 22 and low index contrast routing waveguides 32 can be best realized in the backend of line, by using silicon dioxide layers typically deposited there. Because of the low index contrast, the low index contrast coupling section waveguides 22 and low index contrast routing waveguides 32 can have a large height and width, which is more than 3 µm, e.g. in the range of 4 ÷ 10 µm. In such a case, these waveguides are called bulky low index contrast coupling section/routing waveguides 22', 32'. If a square-shaped cross-section is used, bulky low index contrast coupling section waveguides 22' and bulky low index contrast routing waveguides 32' can support two degenerated polarization states with a horizontal and vertical polarization, in analogy to the optical fiber's LP₀₁ₓ, LP_{01y}. Due to the similarity of the guided modes of bulky low index contrast coupling section/routing waveguides 22', 32' and single-mode fibers, the bulky low index contrast coupling section/routing waveguides 22', 32' can be used for the immediate interfacing to a single mode fiber, including a standard single mode fiber. Along with coupling to chip-external discrete waveguides, interfacing to chip-external integrated waveguides (e.g. III-V based lasing structures) or chip-internal integrated waveguides (e.g. a 3D stacked photonic layers at a different vertical position) can be considered.

A transfer of electromagnetic waves comprising different modes and polarization states, also called mode coupling and transfer, can be done both internally in a vertical direction between the stacked coupling section waveguides 2 within the vertical directional coupler 1 and externally in a horizontal or vertical direction between the coupling section waveguides 2 from the stack and a waveguide or auxiliary light guiding structure, which is physically separated from the stacked waveguide system.

The converter structure is configured for spot size conversion of light by the use of auxiliary higher-order modes and/or auxiliary hybrid modes different from fundamental modes within a coupling section waveguide 2 of at least one polarization branch 8, between a source mode and a target mode, wherein each coupling section waveguide 2 is a high index contrast coupling section waveguide 21 or a low index contrast coupling section waveguide 22, and each routing waveguide 3 is a high refractive index contrast routing waveguide 31 or a low refractive index contrast routing waveguide 32, wherein routing waveguides 3 and coupling section waveguides 2, which are directly connected with each other, have the same refractive index contrast.

Preferably, at least one of the access sides A, B of one coupling section waveguide 2 has equal or different dimensions with at least one of the access sides A, B of an adjacent coupling section waveguide 2. Thus, the spot of light is conversed in different values as a result of coupling of waveguides with cross-sections having different shapes and sizes. This way the converter structure is a mode spot size converter.

The converter structure is configured for mode type direct or indirect conversion of light between a source mode and a target mode, wherein a waveguide with given polarization state with a certain modal composition can be coupled to waveguide with a polarization state with another modal composition. Direct mode type conversion is achieved when a source mode is transformed into a target mode without using an intermediate mode transformation step that involves auxiliary modes different from the target mode. Indirect mode type conversion connects a source mode to a target mode by using an intermediate transformation into modes different from the target mode. More particularly, indirect conversion is achieved by the use of auxiliary higher-order modes and/or auxiliary hybrid modes different from fundamental modes within a coupling section waveguide 2 of at least one polarization branch 8, wherein the polarization branches 8 are configured for direct or indirect coupling of x-polarization state and/or y-polarization state. This way the converter structure is designed for a mode type conversion.

The mode coupling via auxiliary higher-order modes (i.e. modes different from the fundamental modes, wherein fundamental modes can be for example TE₀₀ and TM₀₀) and/or auxiliary hybrid modes (i.e. modes composed of both x- and y-polarized fields) solves the problem of sensitivity to fabrication deviations resulting from the necessity to fabricate features with very small dimensions. Structures assisted by such auxiliary modes have significantly larger minimal required feature sizes (no nanotip necessary), leading to an increased process window, which enables low-cost and large-scale fabrication, e.g. using 248 nm deep ultraviolet (DUV) lithography. This is a significant advantage compared to devices using e.g. subwavelength (metamaterial) components.

Furthermore, auxiliary higher-order modes/hybrid modes extend the functionality of the converter structure, adding to the mode spot size conversion feature a polarization conversion feature (i.e. a given input polarization state can be coupled to another polarization state) and/or a mode type conversion feature (i.e. a given polarization state with a certain modal composition can be coupled to a polarization state with another modal composition). So, the converter structure is configured for polarization conversion (rotation) of light within a coupling section waveguide 2 of at least one polarization branch 8, possibly having auxiliary hybrid modes, wherein a waveguide with given input polarization state can be coupled to a waveguide with another polarization state. Thus, a source x-polarized mode is connected to y-polarized mode and/or a source y-polarized mode is connected to a target x-polarized. This way the converter structure is a polarization converter (i.e. rotator).

A polarization splitting functionality is enabled by the spatial separation in different polarization branches 8 and the use of different operating points within the polarization branch 8 for each single polarization state, which has to be coupled. The spatial separation can be achieved by a vertical directional coupler 1 with multiple coupling section waveguides or a sequence of vertical directional couplers 1, each of them having two coupling section waveguides 2. A conversion to further polarization states and/or modes can be supported by additional auxiliary routing directional couplers 4.

The structure according to the invention has a reduced footprint.

If a coupling from an external optical fiber (fundamental modes LP₀₁ₓ, LP_{01y}) to an integrated SOI waveguide (fundamental modes TE₀₀, TM₀₀) is considered as an example, instead of the direct coupling LP₀₁ₓ - TE₀₀, LP_{01y} - TM₀₀, an exemplary system may utilize the sequence: LP₀₁ₓ - auxiliary higher-order transverse electric mode, e.g. TE₂₀ - TE₀₀ and LP_{01y} - auxiliary hybrid mode, e.g. TM₀₀/TE₁₀ - auxiliary higher-order transverse electric mode, e.g. TE₁₀ - TE₀₀. In the latter case, the presented method and converter structure address another issue of current solutions - the large total on-chip footprint for the coupling to TM₀₀ and the subsequent splitting, rotation and conversion of TM₀₀ to TE₀₀. For that purpose, here one makes use of mode hybridization within the mode spot size converter (i.e. within a polarization branch of the vertical directional coupler 1), thus there is no TM₀₀ and y-polarization state on the chip 100, but y-polarized input light is directly converted to an x-polarized on-chip mode, by operating the mode spot size converter in a hybrid mode regime (i.e. choosing the geometry of a coupling section waveguide 2 within the vertical directional coupler 1 to support the propagation of an auxiliary hybrid mode) and thus combining mode spot size conversion and polarization conversion/rotation/separation functionalities. The converter structure is simultaneously configured for a mode spot size conversion, a mode type conversion, a polarization conversion (also called polarization rotation) and a polarization splitting. In addition, the method using auxiliary higher-order modes/hybrid modes into separate waveguide sections for LP₀₁ₓ and LP_{01y} (different polarization branches 8) using different operating points improves the polarization splitting capabilities and reduces the cross-coupling (i.e. the undesired coupling of a given polarization state into the wrong polarization branch 8) and the polarization crosstalk of the present converter structure. Prior-art approaches coupling x- and y-polarized light within the same waveguide cannot make use of this method, as both polarizations cannot be coupled with the same efficiency, e.g. when a waveguide is designed to operate in a hybrid mode regime. The improved polarization splitting and the reduced polarization crosstalk is achieved, while maintaining high coupling efficiency (no excess loss), large optical bandwidth (broadband operation possible) and low polarization dependent loss.

In one embodiment of the invention, the converter structure is configured as a horizontal integrated coupling interface for light, wherein the light of a source is directed horizontally, i.e. parallel to the light propagation direction within the chip 100, resp. the target (E)PIC 11.

The chip 100, according to the invention, has an integrated vertical directional coupler 1 with stacked coupling section waveguides 2 having a vertical distance from each other and providing horizontal coupling via mode spot size conversion and mode type conversion (where the term horizontal refers to a horizontal source light propagation direction parallel to the light propagation within the chip 100, resp. the target (E)PIC 11), and polarization splitting and rotation with improved characteristics.

For the operation of the converter structure as a mode spot size converter, an evanescent electromagnetic energy and power transfer in vertical direction, between at least two coupling section waveguides 2 is necessary. Different configurations are possible to achieve different functionalities.

One or more of the low index contrast coupling section waveguides 22 or one or more of the high index contrast coupling section waveguides 21 can be configured to receive or transmit light with optical power from/to a chip-external or chip-internal light source via evanescent coupling and is further configured to guide a part or all of the light with optical power further to one or more polarization branches 8 within the vertical directional coupler 1.

One or more bulky low refractive index contrast routing waveguide 32' can be configured to receive or transmit light with optical power from/to a chip-external light source via edge coupling and is further configured to transfer the light with optical power to a following bulky low index contrast coupling section waveguide 22' and one or more polarization branches 8 within the vertical directional coupler 1.

All configurations can be made for transferring the light radiation inside the chip 100 in forwards direction or in reverse direction, i.e. from the (E)PIC 11 (only a part of it is shown on the figures) to the source of light or from the source of light to the (E)PIC 11, and from a lower vertical level towards a higher vertical level, or from a higher vertical level towards a lower vertical level.

In a first preferred configuration, an external light source provides light radiation, which has either a fixed polarization state or is composed of two orthogonal polarization states. The light is directed towards the edge of a chip 100 including (E)PICs 11, either by placing the light source horizontally at the edge or by using an auxiliary medium (such as an external glass interposer/cantilever, glass injector, a polymer, and others) or structure (e.g. a free-space configuration, micro-optic elements, microlenses, photonic wirebonds, and others) for light guiding and/or light deflection. The external light source can be both an individual (discrete) component (e.g. a single-mode fiber, a discrete waveguide, a laser, etc.) and an integrated waveguide located within another chip 100'. The (E)PIC 11, to which radiation is delivered, contains a converter structure, object of the invention, comprising a vertical directional coupler 1 to receive light from the external light source. The external light radiation is first directed to a bulky low index contrast routing waveguide 32' at its access side A', the light of an arbitrary polarization composition propagates within the low index contrast routing waveguide 32' from access side A' to access side B'. The light is lead to a bulky low index contrast coupling section waveguide 22' within a vertical directional coupler 1 by connecting access side B' of the bulky low index contrast routing waveguide 32' with access side A of the bulky low index contrast coupling section waveguide 22'. Within the vertical directional coupler 1, the light is directed from the bulky low index contrast coupling section waveguide 22' towards one or more high index contrast coupling section waveguides 21 at different vertical positions via evanescent coupling. A high index contrast photonic layer 61 comprising a high index contrast coupling section waveguide 21 can be located below and/or above a low index contrast photonic layer 62 comprising a bulky low index contrast coupling section waveguide 22'. At each high index contrast photonic layer 61, multiple high index contrast coupling section waveguides 21 can be arranged in parallel or in sequence and can form one or more polarization branches 8. At least one of all polarization branches 8 is operated using auxiliary higher-order modes or auxiliary hybrid modes. At each polarization branch 8 with high index contrast, the access side B of a high index contrast coupling section waveguide 21 is connected to the access side A' of a high index contrast routing waveguide 31, which can lead the light to another structure for light processing, e.g. to an arrangement of high index contrast routing waveguides 31, or to another part of the (E)PIC 11. In case of successive arrangement of polarization branches 8 at the same high index contrast photonic layer 61, the first high index contrast routing waveguide 31 of the first polarization branch 8 forms a S-bend, which is curved in a way to lead the received signal outside of the vertical directional coupler 1 and to guide the light parallel to the vertical directional coupler 1. By choosing appropriate geometric dimensions of the coupling section waveguides 2 in the converter structure, the configuration acts as a mode spot size converter, i.e. is configured for mode spot size conversion. Naturally, the configuration can be operated in the opposite direction. [Figs. 1 ÷ 3]

The above-described preferred configuration for edge coupling is illustrated by three figures (Figs. 1 ÷ 3). Figure 1 shows a first example of the preferred configuration for edge coupling in a longitudinal cross-section (x-cut), integrated within a chip 100. The structure is configured with two polarization branches 8 (an x- and y-polarization branch 81, 82) realized in two parallel high refractive index contrast photonic layers 61 at different vertical locations. The positions of the polarization branches 8 may be inverted. The polarization branches 8 are shown in part depicting one high index contrast coupling section waveguide 21 connected at its access side B to access side A' of one high index contrast routing waveguide 32. More detailed description of different variants of the polarization branches 8 are provided in Figs. 9 ÷ 11 (an x-polarization branch 81) and Figs. 12, 13 (a y-polarization branch 82). The section of connection of external arbitrary polarizations/modes 71 is located at the chip's 100 edge. A bulky low index contrast routing waveguide 32' receives light at its access side A' from a chip-external light transmitting/receiving unit 7 and guides it towards a bulky low index contrast coupling section waveguide 22' within a vertical directional coupler 1 (connection of access sides B' and A). The vertical directional coupler 1 comprises the bulky low index contrast coupling section waveguide 22' sandwiched between two high index contrast coupling section waveguides 21, which are part of two polarization branches 8. In this example, the y-polarization branch 82 is located above the bulky low index contrast coupling section waveguide 22', and the x-polarization branch 81 is located below it. The bulky low index contrast coupling section waveguide 22' provides x-, resp. y-polarized optical signal towards the x-, y-polarization branch 81, 82 via evanescent coupling. The electromagnetic energy/power transfer, which may be in forwards or reverse direction, is shown symbolically via arrows. Figure 2 shows a second example of a preferred configuration for edge coupling in a longitudinal cross-section (x-cut), integrated within a chip 100. The structure is configured with two polarization branches 8 (an x- and y-polarization branch 81, 82) realized at the same high index contrast photonic layer 61 in sequence. The high index contrast photonic layer 61 may be placed also above the low index contrast photonic layer 62. The positions of the polarization branches 8 may be inverted. The polarization branches 8 are shown in part depicting one high index contrast coupling section waveguide 21 connected to one high index contrast routing waveguide 31 (connection of corresponding access sides B and A'). More detailed description of different variants of the polarization branches are provided in Figs. 9 ÷ 11 (an x-polarization branch 81) and Figs. 12, 13 (a y-polarization branch 82). The section of connection of external arbitrary polarizations/modes 71 is located at the chip's edge. A bulky low index contrast routing waveguide 32' receives light from a chip-external light transmitting/receiving unit 7 at its access side A' and guides it towards a first bulky low index contrast coupling section waveguide 22' within a first vertical directional coupler 1 (connection of access sides B' and A). Within the first vertical directional coupler 1, the x-polarized optical signal is guided via evanescent coupling from the first bulky low index contrast coupling section waveguide 22' to a first high index contrast coupling section waveguide 21, which is a part of an x-polarization branch 81. The first high index contrast routing waveguide 31 of the x-polarization branch 81 is bent (shown pointing into the sheet) and routes the coupled signal outside of the vertical directional coupler 1. The y-polarized signal leaves the first vertical directional coupler 1 and is guided via a second bulky low index contrast routing waveguide 32' (connection of access sides B and A') towards a second bulky low index contrast coupling section waveguide 22' (connection of access sides B' and A) within a second vertical directional coupler 1. Within the second vertical directional coupler 1, the second bulky low index contrast coupling section waveguide 22' transfers the y-polarized optical signal via evanescent coupling towards a second high index contrast coupling section waveguide 21, which is a part of a y-polarization branch 82 and is connected to another high index contrast routing waveguide 31, which is bent pointing into the sheet in this example. The electromagnetic energy/power transfer, which may be in forwards or reverse direction, is shown symbolically via arrows. Figure 3a shows a third example of a preferred configuration for edge coupling in a longitudinal cross-section (x-cut), integrated within a chip 100. The structure is configured with two polarization branches 8 (an x- and y-polarization branch 81, 82) realized at the same high refractive index contrast photonic layer 61 in parallel. The high index contrast photonic layer 61 may be placed also above the low index contrast photonic layer 62. The x-cut cross-section depicts only one of both polarization branches - the y-polarization branch 82 as an example. The positions of the polarization branches 8 may be inverted. The polarization branch 8 is shown in part depicting one high index contrast coupling section waveguide 21 connected to one high index contrast routing waveguide 31 (connection of corresponding access sides B and A'). More detailed description of different variants of the polarization branches 8 are provided in Figs. 9 ÷ 11 (an x-polarization branch 81) and Figs. 12, 13 (a y-polarization branch 82). The section of connection of external arbitrary polarizations/modes 71 is located at the chip's edge. A bulky low index contrast routing waveguide 32' receives light from a chip-external light transmitting/receiving unit 7 at its access side A' and guides it towards a first bulky low index contrast coupling section waveguide 22' within a vertical directional coupler 1 (connection of access sides B' and A). Within the vertical directional coupler 1, the x-polarized optical signal is guided via evanescent coupling from the bulky low index contrast coupling section waveguide 22' to a first high index contrast coupling section waveguide 21, which is a part of an x-polarization branch 81. At the same time, the bulky low index contrast coupling section waveguide 22' transfers the y-polarized optical signal via evanescent coupling towards a second high index contrast coupling section waveguide 21, which is a part of a y-polarization branch 82. The electromagnetic energy/power transfer, which may be in forwards or reverse direction, is shown symbolically via arrows. Figure 3b shows the lateral cross-section (z-cut) at position 3-Z, which is located at z=const. within the vertical directional coupler 1. The figure illustrates the positions of the coupling section waveguides 2 within the vertical directional coupler 1.

In a second preferred configuration, an external light source provides light radiation, which has either a fixed polarization state or is composed of two orthogonal polarization states. The light is directed parallel to the surface of a chip 100 comprising (E)PICs 11. For that purpose, a waveguiding structure with a waveguide's axis oriented parallel to the chip's surface can be placed on the top of said chip's surface or be embedded in an auxiliary waveguiding medium. Alternatively, an auxiliary medium or structure for light guiding and/or light deflection can be used. The external light source can be both an individual (discrete) component (e.g. a single-mode fiber, a discrete waveguide, a laser, etc.) and an integrated waveguide located within another chip 100'. The (E)PIC 11, to which radiation is delivered, contains a converter structure, object of the invention, comprising a vertical directional coupler 1 to receive light from the external light source. The external light radiation is evanescently coupled to a low index contrast coupling section waveguide 22. The low index contrast coupling section waveguide 22 is extended in its length towards a vertical directional coupler 1 and guides further the light vertically via evanescent coupling towards one or more high index contrast coupling section waveguides 21 located within photonic layers 6 at a lower and/or higher vertical position compared to the vertical position of the low index contrast coupling section waveguide 22. At each high index contrast photonic layer 61, multiple high index contrast coupling section waveguides 21 can be arranged in parallel or in sequence and can form one or more polarization branches 8. At least one of all polarization branches 8 is operated using auxiliary higher-order modes or auxiliary hybrid modes. At each polarization branch 8 with high index contrast, the access side B of a high index contrast coupling section waveguide 21 is connected to the access side A' of a high index contrast routing waveguide 31, which can lead the light to another structure for light processing, e.g. to an arrangement of high index contrast routing waveguides 31, or to another part of the (E)PIC 11. Alternatively, the light from the external source can be completely coupled and processed to one or more low index contrast coupling section waveguides 22, which are placed in parallel or in sequence at the particular photonic layer 6. By choosing appropriate geometric dimensions of the coupling section waveguides 2 in the converter structure, the configuration acts as a mode spot size converter, i.e. is configured for mode spot size conversion. The configuration can be operated in the opposite direction, i.e. from the (E)PIC 11 to the external waveguide. [Figs. 4 ÷ 6]

The above-described preferred configuration for evanescent coupling is illustrated in Figs. 4 ÷ 6. Figure 4 shows a first example of a preferred configuration for evanescent coupling in a longitudinal cross-section (x-cut), integrated within a chip 100. The structure is configured with two polarization branches 8 (an x- and y-polarization branch 81, 82) realized at the same high refractive index contrast photonic layer 61 in sequence. The high index contrast photonic layer 61 may be placed also above the low index contrast photonic layer 62. The sequence of both polarization branches 8 may be exchanged. The polarization branches 8 are shown in part depicting one high index contrast coupling section waveguide 21 connected to one high index contrast routing waveguide 31 (connection of corresponding access sides B and A'), which is curved and points into the sheet. More detailed description of different variants of the polarization branches 8 are provided in Figs. 9 ÷ 11 (an x-polarization branch 81) and Figs. 12, 13 (a y-polarization branch 82). The section of connection of external arbitrary polarizations/modes 71 is located at the chip's surface. A first bulky low index contrast coupling section waveguide 22' receives light evanescently from a chip-external light transmitting/receiving unit 7. The bulky low index contrast coupling section waveguide 22' is extended in its length and becomes a part of a first vertical directional coupler 1, in which coupling of x-polarized light to the x-polarization branch 81 takes place. The y-polarized light propagates from the first vertical directional coupler 1 via a bulky low index contrast routing waveguide 32' towards a second vertical directional coupler 1, in which the y-polarized light is coupled into a y-polarization branch 82. The exact steps are as already explained in the description of Fig. 2. Figure 5a shows a second example of a preferred configuration for evanescent coupling in a longitudinal cross-section (x-cut), integrated within a chip 100. The structure is configured with two polarization branches (an x- and y-polarization branch 81, 82) realized at the same high refractive index contrast photonic layer 61 in parallel. The high index contrast photonic layer 61 may be placed also above the low index contrast photonic layer 62. The x-cut cross-section depicts only one of both polarization branches 8 - the x-polarization branch 81 as an example. The positions of the polarization branches 8 may be inverted. The polarization branch 8 is shown in part depicting one high index contrast coupling section waveguide 21 connected to one high index contrast routing waveguide 31 (connection of corresponding access sides B and A'). More detailed description of different variants of the polarization branches 8 are provided in Figs. 9 ÷ 11 (an x-polarization branch 81) and Figs. 12, 13 (a y-polarization branch 82). The section of connection of external arbitrary polarizations/modes 71 is located at the chip's surface. A bulky low index contrast coupling section waveguide 22' receives light evanescently from a chip-external light transmitting/receiving unit 7. The bulky low index contrast coupling section waveguide 22' is extended in its length and becomes a part of a vertical directional coupler 1. Within the vertical directional coupler 1, the x-polarized optical signal is guided via evanescent coupling from the bulky low index contrast coupling section waveguide 22' to a first high index contrast coupling section waveguide 21, which is a part of an x-polarization branch 81. At the same time, the bulky low index contrast coupling section waveguide 22' transfers the y-polarized optical signal via evanescent coupling towards a second high index contrast coupling section waveguide 21, which is a part of a y-polarization branch 82 (not shown). The electromagnetic energy/power transfer, which may be in forwards or reverse direction, is shown symbolically via arrows. Figure 5b shows the lateral cross-section (z-cut) at position 5-Z, which is located at z=const. within the vertical directional coupler 1. The figure illustrates the positions of the coupling section waveguides 2 within the vertical directional coupler 1. Figure 6 shows a third example of the preferred configuration for evanescent coupling in a longitudinal cross-section (x-cut), integrated within a chip 100. The structure is configured with two polarization branches 8 (an x- and y-polarization branch 81, 82) realized in two parallel high refractive index contrast photonic layers 61 at different vertical locations. The vertical positions of the polarization branches 8 may be inverted. The polarization branches 8 are shown in part depicting one high index contrast coupling section waveguide 21 connected at its access side B to access side A' of one high index contrast routing waveguide 31. More detailed description of different variants of the polarization branches 8 are provided in Figs. 9 ÷ 11 (an x-polarization branch 81) and Figs. 12, 13 (a y-polarization 82). The section of connection between arbitrary polarizations/modes 71 is located at the chip's surface. A bulky low index contrast coupling section waveguide 22' receives light evanescently from a chip-external light transmitting/receiving unit 7. The bulky low index contrast coupling section waveguide 22' is extended in its length and becomes a part of a vertical directional coupler 1. The vertical directional coupler 1 comprises the bulky low index contrast coupling section waveguide 22' and two high index contrast coupling section waveguides 21, which are part of two polarization branches 8. In this example, the x-polarization branch 81 is located above the bulky low index contrast coupling section waveguide 22', and the y-polarization branch 82 is located below it. The bulky low index contrast coupling section waveguide 22' provides x-, resp. y-polarized optical signal towards the x-, y-polarization branch 81, 82 via evanescent coupling. The electromagnetic energy/power transfer, which may be in forwards or reverse direction, is shown symbolically via arrows.

In a third preferred configuration, an external light source provides light radiation, which has either a fixed polarization state or is composed of two orthogonal polarization states. The light is directed parallel to the surface of a chip 100 comprising (E)PICs 11. For that purpose, a waveguiding structure with a waveguide's axis oriented parallel to the chip's surface can be placed on the top of the chip's surface or be embedded in an auxiliary waveguiding medium. Alternatively, an auxiliary medium or structure for light deflection can be used. The external light source can be both an individual (discrete) component (e.g. a single-mode fiber, a discrete waveguide, a laser, etc.) and an integrated waveguide located within another chip 100'. The (E)PIC 11, to which radiation is delivered, contains a converter structure, object of the invention, comprising a vertical directional coupler 1 to receive light from the external light source. The light from the external waveguide is evanescently coupled to a high index contrast coupling section waveguide 21. The high index contrast coupling section waveguide 21 is extended in its length towards a vertical directional coupler 1, guides further the light having one or both input polarizations and passes a part or all of the light's optical power vertically via evanescent coupling towards a low index contrast coupling section waveguide 22 placed at a different, typically lower vertical level. The low index contrast coupling section waveguide 22 delivers the light via evanescent coupling to one or more high index contrast coupling section waveguides 21 located within a photonic layer 6 at a different, typically lower vertical level compared to the low index contrast coupling section waveguide 22. At each high index contrast photonic layer 61, multiple high index contrast coupling section waveguides 21 can be arranged in parallel or in sequence and can form one or more polarization branches 8. At least one of all polarization branches 8 is operated using auxiliary higher-order modes or auxiliary hybrid modes. At each polarization branch 8 with high index contrast, the access side B of a high index contrast coupling section waveguide 21 is connected to the access side A' of a high index contrast routing waveguide 31, which can lead the light to another structure for light processing, e.g. to an arrangement of high index contrast routing waveguides 31, or to another part of the (E)PIC 11. Alternatively, the light from the external source can be completely coupled and processed into one or more high index contrast coupling section waveguides 21, which are placed in parallel or in sequence at the particular input photonic layer 6, or the light from the external source can be simultaneously coupled evanescently to two or more coupling section waveguides 2 at different photonic layers 6. By choosing appropriate geometric dimensions of the coupling section waveguides 2 in the converter structure, the configuration acts as a mode spot size converter. The configuration can be operated in the opposite direction, i.e. from the (E)PIC 11 to the external waveguide. Figure 7 shows an example of this preferred configuration for evanescent coupling in a longitudinal cross-section (x-cut), integrated within a chip 100. The structure is configured with two polarization branches 8 (an x- and y-polarization branch 81, 82) realized in two parallel high refractive index contrast photonic layers 61 at different vertical locations. The vertical positions of the polarization branches 8 may be inverted. The polarization branches 8 are shown in part depicting one high index contrast coupling section waveguide 21 connected at its access side B to access side A' of one high index contrast routing waveguide 31. More detailed description of different variants of the polarization branches 8 are provided in Figs. 9 ÷ 11 (an x-polarization branch 81) and Figs. 12, 13 (a y-polarization branch 82). The section of connection of external arbitrary polarizations/modes 71 is located at the chip's surface. A chip-external light transmitting/receiving unit 7 is located above and becomes a part of a vertical directional coupler 1, having two high index contrast coupling section waveguides 21 at the top and the bottom of the chip 100 and a bulky low index contrast coupling section waveguide 22' sandwiched between them. The two high index contrast coupling section waveguides 21 are part of polarization branches 8. In this example, the y-polarization branch 82 is located above the bulky low index contrast coupling section waveguide 22' and the x-polarization branch 81 is located below it. The high index contrast coupling section waveguide 21 within the y-polarization branch 82 receives light evanescently directly from the chip-external light transmitting/receiving unit 7 and guides it towards a high index contrast routing waveguide 31 (connection of access sides B and A'). At the same time, x-polarized light is evanescently coupled from the external light transmitting/receiving unit 7 into the bulky low index contrast coupling section waveguide 22'. The latter transfers evanescently the x-polarized light towards the second high index contrast coupling section waveguide 21, part of the x-polarization branch 81, located at a lower vertical level. The second high index contrast coupling section waveguide 21 transports the received light further towards the high index contrast routing waveguide 31, which is connected with it (access side B with access side A'). The electromagnetic energy/power transfer, which may be in forwards or reverse direction, is shown symbolically via arrows.

In a fourth preferred configuration, an internal routing waveguide 3 is given at a certain vertical level. The routing waveguide 3 delivers light radiation with one or more polarizations and/or modes and is connected to an (E)PIC 11 placed within a photonic layer 6 at a high vertical level. Structures belonging to this (E)PIC 11 are connected to access side A' of the routing waveguide 3. The routing waveguide 3 can be a low index contrast or high index contrast routing waveguide 32, 31. The access side B' of a low index contrast or high index contrast routing waveguide 32, 31 is connected to the access side A of a low index contrast or a high index contrast coupling section waveguide 22, 21, respectively. The connected high/low index contrast routing waveguide 31, 32 and high/low index contrast coupling section waveguide 21, 22 are a part of a source polarization branch 8. The high index contrast or low index contrast coupling section waveguide 21, 22 is a part of a vertical directional coupler 1 within a converter structure, object of the invention, and guides the light partially or fully towards a low index contrast or a high index contrast coupling section 22, 21 waveguide located at a lower level. The number of coupling section waveguides 2 within each photonic layer 6 can be extended to more than one (placed in parallel or in sequence) and can form one or more target polarization branches 8. At least one of all polarization branches 8 is operated using auxiliary higher-order modes or auxiliary hybrid modes. The procedure can be extended to more photonic layers 6 (vertical levels). At least one of the waveguides within the vertical directional coupler 1 is preferably a bulky low index contrast coupling section waveguide 22'. The low index contrast or high index contrast coupling section waveguide 22, 21 at the lowest level is respectively connected at its access side B with the access side A' of a low index contrast or high index contrast routing waveguide 32, 31. The routing waveguides 3 transport the light within an (E)PIC 11 at a lower vertical level, compared to the level of the light's origin. The converter structure is a connecting interface between photonic layers 6 starting at different vertical locations within the chip 100 and can be operated in the opposite direction, i.e. from a lower vertical level towards a higher vertical level. With other words, source and target polarization branches 8 may switch their roles. Figure 8 illustrates exemplary the connection between two high index contrast photonic layers 61 located at different vertical locations. In this example, the source polarization branch 8 is an x-polarization branch 81, located at the highest vertical level, and the target polarization branch 8 is also an x-polarization branch 81, located at the lowest vertical level. The source and target polarization branches 8 may be different, i.e. different combinations of source and target polarization branches are possible, e.g. x-polarization branch 81 to x-polarization branch 81, y-polarization branch 82 to y-polarization branch 82, x-polarization branch 81 to y-polarization branch 82 or y-polarization branch 82 to x-polarization branch 81. In this particular embodiment, the assignment of the polarization branches 8 refers to the polarization of their corresponding (E)PIC 11. The polarization branches 8 are shown in part depicting: one high index contrast coupling section waveguide 21 connected at its access side A to access side B' of one high index contrast routing waveguide 31 (source polarization branch 8) and one high index contrast coupling section waveguide 21 connected at its access side B to access side A' of one high index contrast routing waveguide 31 (target polarization branch 8). More detailed description of different variants of the polarization branches 8 are provided in Figs. 9 ÷ 11 (an x-polarization branch 81) and Figs. 12, 13 (a y-polarization branch 82). The first high index contrast routing waveguide 31 at the highest photonic layer 6 guides the source light towards a first high index contrast coupling section waveguide 21. The first high index contrast coupling section waveguide 21 is located above a bulky low index contrast coupling section waveguide 22', which is placed above a second high index contrast coupling section waveguide 21, located at the lowest photonic layer 6. The bulky low index contrast coupling section waveguide 22' receives the light from the highest high index contrast coupling section waveguide 21 and transfers it completely to the lowest high index contrast coupling section waveguide 21, which is connected with a high index contrast routing waveguide 31. The electromagnetic energy/power transfer, which may be in forwards or reverse direction, is shown symbolically via arrows.

The polarization branches 8 mentioned above are an essential part of the provided converter structure. Typically, waveguides used within mode spot size converters require very small width dimensions, which become very critical and difficult to fabricate with decreasing wavelength. To address this problem, the alternative polarization handling principle for the design of polarization branches 8 within mode spot size converters according to the invention is provided.

Along with a mode spot size conversion and a mode transfer (i.e. transport) functionality, the present invention has the capability of polarization splitting and/or mode type conversion and/or polarization conversion (i.e. rotation). In the following, the handling of an incident source x- and y-polarization state, is achieved by polarization branches 8, which will be described separately. The polarization branches 8 can be used together in different combinations. Each polarization branch 8 includes a coupling section waveguide 2 (straight or tapered) within a vertical directional coupler 1 and the following one or more routing waveguides 3 (straight or tapered or bent) and potentially routing directional couplers 4. The polarization branch 8 design and engineering achieve different polarization state and/or mode type transformations by adapting the geometry of the coupling section and routing waveguides 2, 3.

According to the invention, the coupling of an x- and y-polarization states is carried out in different polarization branches 8. This gives more freedom in the choice of height and width of both access sides of the coupling section waveguides 2 in these polarization branches 8, i.e. in the choice of the operating point of each branch 8. This prevents the converter structure from undesired polarization mixing leading to issues such as polarization crosstalk.

Herein, a polarization branch 8 is dedicated for the coupling of an x-polarized incident electromagnetic wave. The most intuitive approach to couple a source x-polarized field is its direct conversion to the target x-polarized fundamental transverse electric mode (e.g. TE₀₀) within the (E)PIC 11. A source light radiation with an x-polarization state originates from an external waveguide (discrete or integrated), or an external auxiliary light guiding medium, or an internal waveguide. The light is guided into a vertical directional coupler 1, using one of the preferred mode spot size conversion or mode transfer schemes. Figures 9a and 10 illustrate an example of an x-polarization branch 81 within an edge coupling configuration in top-view (y-cut), showing two different vertical photonic layers 6 in a layout-like representation. (Note: The IC layout is a representation in terms of planar geometric shapes, which correspond to the patterns of different material layers that make up the components of the integrated circuit. Different layers at different vertical levels are shown together stacked over each other.) The example is applicable in the same way to evanescent coupling schemes (for connecting with both chip-external and chip-internal light sources). The direction of energy/power transfer may be in forwards or reverse direction and is shown symbolically via arrows, wherein different mode guiding sections within the polarization branch 8 and the following (E)PIC 11 (shown in part) are illustrated, i.e. fundamental transverse electric mode guiding sections 9. The transitions between different waveguide segments are shown by horizontal dashed lines with marked access sides assignments. The vertical directional coupler 1 is arranged at the target (E)PIC 11 to which the source x-polarization state has to be provided, and within the vertical directional coupler 1 there is a coupling section waveguide 2, which is a part of a polarization branch 8, connected to other parts of the target (E)PIC 11. This coupling section waveguide 2 can be tapered in a way that the x-polarized mode within the vertical directional coupler 1 is coupled to a fundamental transverse electric mode (e.g. TE₀₀) within the coupling section waveguide 2. The tapering is mostly advantageous for two purposes - to enhance the optical bandwidth of the coupled signal (i.e. to couple efficiently more wavelengths), and to increase the fabrication tolerances. The coupling section waveguide 2 is usually a high index contrast coupling section waveguide 21. In a typical tapered high index contrast coupling section waveguide 21, the access side A is made as narrow as necessary to ensure that the fundamental transverse electric mode (e.g. TE₀₀) within the high index contrast coupling section waveguide 21 is mode matched (k-vector matched) to the source x-polarized mode within the vertical directional coupler 1. The narrow access side A is gradually transformed into the wider access side B of the high index contrast coupling section waveguide 21. This mode matching (k-vector matching) must be given for all wavelengths within the target spectrum. Often, the fabrication of narrow dimensions requires also a low height of access side A (e.g. < 180 nm). Accordingly, for example, access side B has also a low height (e.g. < 180 nm) and a larger width compared to access side A. Depending on the particular fabrication platform, the height of the tapered high index contrast coupling section waveguide 21 needs to be subsequently matched to the standard waveguide height, which is typically larger (e.g. ≥ 220 nm). This happens after the mode coupling within the vertical directional coupler 1 is finished using the following high index contrast routing waveguides 31, as shown in Fig. 9a. The latter can be formed by a first input section with a low height (having one or more high index contrast routing waveguides 31), fed into a second section with a rib waveguide shape (another high index contrast routing waveguide 31), whereat the rib core has the target end height . Different waveguide heights are illustrated by different patterns in Fig. 9a. The rib core width is then gradually increased to reach in the end the shape of a nanowire waveguide with an increased height, which can be connected to the remaining parts of the (E)PIC 11. This kind of structure is sometimes referred to as a double-tip taper 5. Application-dependent, the double-tip taper 5 may be realized already as a part of the vertical coupling system. The height transition achieved by the use of double tip taper 5 is shown once again in Fig. 9b, in longitudinal cross-section (x-cut) at the polarization branch's 8 symmetry axis (position 9-X). An alternative to the double-tip taper 5 is illustrated in Fig. 10. In this case, the first high index contrast routing waveguide 31 can be kept with a constant geometry as in Fig. 10 or being tapered or bent, but having the same height as the access side B of the high index contrast coupling section waveguide 21. A second width matching tapered high index contrast routing waveguide 31 may be placed between the first and a third high index contrast routing waveguide 31 having a desired width. A fourth high index contrast routing waveguide 31 having the target height is placed in parallel to the third high index contrast routing waveguide 31. Different waveguide heights are illustrated by different patterns in Fig. 10. The latter two routing waveguides 3 form a routing directional coupler 4 at the same vertical location, resp. at the same photonic layer 6. The fourth high index contrast routing waveguide 31 can be tapered, i.e. having different widths of its access sides A' and B'. Mode matching is done to transfer evanescently the fundamental transverse electric mode (e.g. TE₀₀) from the third high index contrast routing waveguide 31 with the lower height towards the fourth high index contrast routing waveguide 31 with the larger height. The latter finally guides the fundamental transverse electric mode (e.g. TE₀₀) towards the target (E)PIC 11. Naturally, the configuration can be operated in a reverse direction [Figs. 9, 10].

The converter structure, according to the invention, is based on the indirect coupling from a source x-polarization state to the target x-polarized fundamental transverse electric mode (e.g. TE₀₀), using an auxiliary higher-order mode. The auxiliary higher-order mode can exist in both nanowire waveguides and rib waveguides, within the rib core or slabs. Other waveguide types, comprising different material composition and distribution and different geometric shape, may be considered. The auxiliary higher-order mode for the indirect coupling of x-polarization state can be each higher-order transverse electric mode, which can be mode matched (k-vector matched) to both the fundamental transverse electric mode (e.g. TE₀₀) and to the x-polarization state of the source light.

A source light radiation with an x-polarization state originates from an external waveguide (discrete or integrated), or an external auxiliary light guiding medium, or an internal waveguide. The light is guided into a vertical directional coupler 1, using one of the preferred mode spot size conversion or mode transfer schemes. Figure 11 illustrates an example of an x-polarization branch 81 within an edge coupling configuration in top-view (y-cut), showing two different vertical photonic layers 6 in a layout-like representation. The example is applicable in the same way to evanescent coupling schemes (for connecting with both chip-external and chip-internal light sources). The direction of energy/power transfer may be in forwards or reverse direction and is shown symbolically via arrows, wherein different mode guiding sections within the polarization branch 8 and the following (E)PIC 11 (shown in part) are illustrated, i.e. a higher-order transverse electric mode guiding section 9' and a fundamental transverse electric mode guiding section 9. The transitions between different waveguide segments are shown by horizontal dashed lines with marked access sides assignments. The vertical directional coupler 1 is arranged at the target (E)PIC 11 to which the source x-polarization state has to be provided, and within the vertical directional coupler 1 there is a coupling section waveguide 2, which is a part of a polarization branch 8, connected to other parts of the target (E)PIC 11. This coupling section waveguide 2 is preferably tapered in a way that the x-polarized mode within the vertical directional coupler 1 is coupled to an auxiliary higher-order transverse electric mode within the coupling section waveguide 2. An exemplary auxiliary higher-order transverse electric mode could be the x-polarized TE₂₀. The coupling section waveguide 2 is usually a high index contrast coupling section waveguide 21. In a tapered high index contrast coupling section waveguide 21, the width of access side A is chosen to ensure that the auxiliary higher-order transverse electric mode (e.g. TE₂₀) within the high index contrast coupling section waveguide 21 is mode matched (k-vector matched) to the source x-polarized mode within the vertical directional coupler 1. The narrow access side A is gradually transformed to the wider access side B of the high index contrast coupling section waveguide 21. The mode matching must be ensured for all wavelengths within the target spectrum. As higher-order modes, e.g. TE₂₀ have typically much lower effective refractive indices compared to fundamental modes, e.g. TE₀₀, a low height of the high index contrast coupling section waveguide 21 may not be needed this time. The necessity for height reduction is determined by the boundary conditions of the particular fabrication platform. Importantly, the lower effective refractive index of the auxiliary higher-order mode within the high index contrast coupling section waveguide 21 guarantees that the widths of access sides A and B will not become critically small. In a typical configuration of the proposed converter structure, such widths exceed 500 nm, which is well in the capabilities of most fabrication platforms, even using lithography techniques with a lower resolution (e.g. 248 nm DUV). In the next step, the coupled auxiliary higher-order transverse electric mode must be transformed into the target fundamental transverse electric mode (e.g. TE₀₀). For this purpose, the auxiliary higher-order transverse electric mode is fed into a first high index contrast routing waveguide 31, which may or may not be tapered or may be bent. A second tapered width matching high index contrast routing waveguide 31 section may be given between the first and a third high index contrast routing waveguide 31 with a desired width. A fourth high index contrast routing waveguide 31 is placed in parallel to the third one to form a routing directional coupler 4 on the same vertical location, resp. at the same photonic layer 6. The fourth high index contrast routing waveguide 31 can be tapered. Both high index contrast routing waveguide 31 may have different or the same heights, depending on the fabrication platform (Fig. 11 shows different heights illustrated by different patterns). The fourth high index contrast routing waveguide 31 has widths of access sides A' and B', such that the auxiliary higher-order transverse electric mode from the third high index contrast routing waveguide 31 is matched and evanescently coupled to the fundamental transverse electric mode (e.g. TE₀₀) in the fourth high index contrast routing waveguide 31. The tapering of the high index contrast routing waveguides 31 guarantees a broadband operation of this section. The fourth high index contrast routing waveguide 31 finally guides the target fundamental transverse electric mode (e.g. TE₀₀) into the remaining (E)PIC 11 parts. Naturally, the configuration can be operated in the opposite direction [Fig. 11].

In analogy to the x-polarization, the most common approach to couple a source y-polarized field is its direct conversion to the target y-polarized fundamental transverse magnetic mode (e.g. TM₀₀). In this case, however, the fundamental transverse magnetic mode (e.g. TM₀₀) must be further processed, so that it is rotated and converted into a fundamental transverse electric mode (e.g. TE₀₀). The present method and converter structure provide and alternative coupling and polarization handling scheme for the y-polarization. A source light radiation with a y-polarization originates from an external waveguide (discrete or integrated), or an external auxiliary light guiding medium, or an internal waveguide. The light is guided into a vertical directional coupler 1, using one of the preferred mode spot size conversion or mode transfer schemes. Figures 12 and 13 illustrate an example of a y-polarization branch 82 within an edge coupling configuration in top-view (y-cut), showing two different vertical photonic layers 6 in a layout-like representation. The example is applicable in the same way to evanescent coupling schemes (for connecting with both chip-external and chip-internal light sources). The direction of energy/power transfer may be in forwards or reverse direction and is shown symbolically via arrows, wherein different mode guiding sections within the polarization branch 8 and the following (E)PIC 11 (shown in part) are illustrated, i.e. a fundamental transverse magnetic mode guiding section 10 (in Fig. 13 only), a hybrid mode guiding section 10', a higher-order transverse electric mode guiding section 9' and a fundamental transverse electric mode guiding section 9. The transitions between different waveguide segments are shown by horizontal dashed lines with marked access sides assignments. The vertical directional coupler 1 is arranged at the target (E)PIC 11 to which the source y-polarization state has to be provided, and within the vertical directional coupler 1 there is a coupling section waveguide 2, which is a part of a polarization branch 8, connected to other parts of the target (E)PIC 11. This coupling section waveguide 2 can be tapered in a way that the y-polarized mode within the vertical directional coupler 1 is coupled to an auxiliary higher-order transverse electric mode within the coupling section waveguide 2. This time, tapering is done not only to improve the fabrication robustness and coupled bandwidth. Importantly, the taper's dimensions are chosen to operate the coupling section waveguide in a hybridization point, e.g. a point in which a fundamental transverse magnetic mode (e.g. TM₀₀) is degenerated (i.e. it has the same propagation constant) with an auxiliary higher-order transverse electric mode (e.g. TE₁₀) (the degenerated mode is here assigned as an (auxiliary) hybrid mode TM₀₀/TE₁₀ or shortly TM₀₀/TE₁₀). The hybridization point determines the width of the waveguide and the auxiliary higher-order transverse electric mode, into which the original y-polarized mode will be converted in this intermediate step. By approaching the hybridization point and departing from that point, the y-polarization state is coupled to the auxiliary hybrid mode (e.g. TM₀₀/TE₁₀) and finally converted into an auxiliary higher-order transverse electric mode (e.g. TE₁₀) . This happens within the coupling section waveguide 2 in the vertical directional coupler 1, which is a part of the converter structure providing mode spot size adaptation. This way, the source y-polarization state is simultaneously coupled and converted into an auxiliary higher-order transverse electric mode, e.g. TE₁₀. Other higher-order transverse electric modes may come into question. The auxiliary higher-order transverse electric mode for coupling of y-polarization state can be each higher-order transverse electric mode , which can be mode matched (k-vector matched) to the y-polarization state of the source light and which can become a hybrid mode by approaching degeneracy with the fundamental transverse magnetic mode (e.g. TM₀₀) for a given integrated coupling section waveguide 2 geometry. There can be a sequence of auxiliary higher-order modes wherein they can be arranged in a sequence hierarchically downwards or in a sequence hierarchically upwards or in a sequence combining hierarchically downwards and hierarchically upwards arrangement, i.e. a mixed type of arrangement. The choice of a coupling section waveguide's 2 height determines the hybridization point and thus the taper geometry. An auxiliary higher-order transverse electric mode can exist in both wire waveguides and rib waveguides, within the rib core or slabs. Waveguides of other types having different material composition, material distribution, geometry and mode-guiding properties may also come into question. The coupling section waveguide 2 is usually a high index contrast coupling section waveguide 21. In a tapered high index contrast coupling section waveguide 21, the width of access side A is chosen to ensure that an auxiliary hybrid mode (e.g. TM₁₀/TE₁₀) within the high index contrast coupling section waveguide 21 is mode matched (k-vector matched) to the source y-polarized mode within the vertical directional coupler 1 (Fig. 12). The narrow access side A is gradually transformed to the wider access side B of the high index contrast coupling section waveguide 21, tapering around the mode hybridization point of the fundamental transverse magnetic mode (e.g. TM₀₀), leading to its conversion into a higher order transverse electric mode, (e.g. TE₁₀) . The processes of mode coupling and mode conversion take place simultaneously. The matching between the source y-polarization state and the auxiliary hybrid mode (e.g. TM₀₀/TE₁₀), as well as the hybridization between the fundamental transverse magnetic mode (e.g. TM₀₀) mode and the auxiliary higher-order transverse electric mode, (e.g. TE₁₀) mode, must be ensured for all wavelengths within the target spectrum. Naturally, the coupling can be done prior to mode hybridization as in Fig. 13, i.e. in the sequence source y-polarization, fundamental transverse magnetic mode (e.g. TM₀₀), auxiliary hybrid mode (e.g. TM₀₀/TE₁₀), auxiliary higher-order transverse electric mode (e.g. TE₁₀) in an analogous way. In the next step, the coupled auxiliary higher-order transverse electric mode (e.g. TE₁₀) is transformed into a fundamental transverse electric mode (e.g. TE₀₀) analogously to the case of an x-polarization (transformation shown both in Figs. 12 and 13). For this purpose, the auxiliary higher-order transverse electric mode is fed into a first high index contrast routing waveguide 31, which may or may not be tapered or may be bent. A second width matching tapered high index contrast routing waveguide 31 may be given between the first and a third high index contrast routing waveguide 31 having a desired width. A fourth high index contrast routing waveguide 31 is placed in parallel to the third one to form a routing directional coupler 4 on the same vertical level. The fourth high index contrast routing waveguide 31 can be tapered. Both high index contrast routing waveguides 31 may have different or the same heights, depending on the fabrication platform. Figures 12, 13 show the case with different heights illustrated by different patterns. The fourth high index contrast routing waveguide 31 has widths of access sides A' and B', such that the auxiliary higher-order transverse electric mode (e.g. TE₁₀) from the third high index contrast routing waveguide 31 is matched and evanescently coupled to the fundamental transverse electric mode (e.g. TE₀₀) in the fourth high index contrast routing waveguide 31. The tapering of the high index contrast routing waveguides 31 guarantees a broadband operation of this section. The fourth high index contrast routing waveguide 31 finally guides the target fundamental transverse electric mode (e.g. TE₀₀) into the remaining (E)PIC 11 parts [Figs. 12, 13]. Alternatively, the high index contrast coupling section waveguide 21 has an asymmetric cross-section with respect to its vertical axis (e.g. L-shaped) and supports hybrid modes that are ±45° polarized with respect to the waveguide's horizontal axis. These hybrid modes serve as auxiliary hybrid modes. The height of the thick part of the high index contrast coupling section waveguide 21 is as needed for the (E)PIC 11. The y-polarization state is coupled to one of the auxiliary hybrid modes. The width of the thick part at access side A is gradually transformed to the wider access side B. Access side B has the shape of a slab waveguide. During the transition from access side A to access side B, the auxiliary hybrid mode is transformed into a fundamental transverse electric mode (e.g. TE₀₀). Any hybrid mode can be used, which can be mode matched (k-vector matched) to the source y-polarized light and the target fundamental transverse electric mode (e.g. TE₀₀) . The matching between the source y-polarization state and the auxiliary hybrid mode within the high index contrast coupling section waveguide 21 and the auxiliary hybrid mode transformation to the fundamental transverse electric mode (e.g. TE₀₀) must be given for all wavelengths within the target spectrum.

This coupling and polarization handling scheme greatly reduces the total length of the section, which is necessary to couple a y-polarized light into a fundamental transverse magnetic mode (e.g. TM₀₀) and convert it into a fundamental transverse electric mode (e.g. TE₀₀), as polarization rotation is already done within the mode spot size converting section.

For multimode applications, the revealed coupling and polarization handling principles - via auxiliary higher-order modes and/or via auxiliary hybrid modes - can be used to excite modes on-chip other than the fundamental mode (e.g. TE₀₀, TM₀₀) in a controlled percentage. The power ratio between the modes can be adjusted as needed.

Although sections for width, height and mode type conversion and/or polarization splitting are shown sequentially, their parallelization is possible.

The light of the external optical source can be composed of a single polarization and the target light polarization is the same or different to it, wherein the source light signal is transformed in its mode type during its direct or indirect coupling to the target light signal.

Based on the mode spot size conversion embodiments, there are many possibilities to couple and split from each other two orthogonal polarizations (e.g. x- and y-polarizations, short X, Y). A list of potential design forms includes:
a) Coupling of X, Y into the same waveguide simultaneously (in the same photonic layer 6) and subsequent separation (prior art devices).
b) Coupling of X, Y into two waveguides in sequence at the same photonic layer 6 or on different vertical photonic layers 6.
c) Coupling of X, Y into two parallel waveguides at the same photonic layer 6.
d) Coupling of X, Y into two parallel waveguides at different vertical photonic layers 6.

In any case, the propagation of a fundamental transverse electric mode and a fundamental transverse magnetic mode, e.g. TE₀₀ and TM₀₀, within the same waveguide is preferably avoided over long distances. The reason is that TE₀₀ and TM₀₀ have different amount of scattering losses at the waveguide's boundaries. Thus, the two polarizations may become non-orthogonal and their separation may not be completely achievable. As a result, a large polarization crosstalk may occur.

When polarization branches 8 for coupling of X and Y follow each other in a sequence and have different operating points, it can be chosen whether X or Y will be coupled first. Preferably, first the polarization state requiring a geometry is coupled, which leads to a lower parasitic coupling of the other polarization. Thus, a lower polarization crosstalk is achieved.

### Exemplary embodiments

Further, herein are described preferred embodiments of the method and of a chip 100 with the converter structure, used as a horizontal integrated coupling interface, according to the invention, allowing simultaneous mode spot size conversion, polarization splitting and mode type conversion and/or polarization conversion (i.e. rotation).
A. In one embodiment, a converter structure is configured as a horizontal integrated coupling interface within an (E)PIC 11 that receives light signal from a chip-external light source, the light signal having one polarization state, which is the x-polarization. The structure and the functional steps are as follow:
   1. A vertical directional coupler 1, comprising one bulky low index contrast coupling section waveguide 22' and one high index contrast coupling section waveguide 21, which are vertically distanced and stacked over each other at different vertical photonic layers 6.
   2. The bulky low index contrast coupling section waveguide 22' is connected to a bulky low index contrast routing waveguide 32', which receives the external light signal via edge coupling, or the bulky low index contrast coupling section waveguide 22' receives the external light signal via evanescent coupling and is extended in its length to become a part of the vertical directional coupler 1.
   3. Within the vertical directional coupler 1, the bulky low index contrast coupling section waveguide 22' transfers the received light towards the high index contrast coupling section waveguide 21 via evanescent coupling.
   4. The high index contrast coupling section waveguide 21 is a part of a polarization branch 8 and is configured to receive the source x-polarized light in an auxiliary higher-order transverse electric mode ( e.g. TE₂₀), which is different from the fundamental transverse electric mode (e.g. TE₀₀) in this waveguide. This is enabled by mode matching between the source x-polarized mode and the auxiliary higher-order transverse electric mode within the desired wavelength range (i.e. spectrum/bandwidth). The mode matching is achieved by choosing appropriate geometric dimensions of access sides A, B of the high index contrast coupling section waveguide 21. The high index contrast coupling section waveguide 21 may be tapered to extend the coupled bandwidth.
   5. Access side B of the high index contrast coupling section waveguide 21 is connected to access side A' of a first high index contrast routing waveguide 31. The high index contrast coupling section waveguide 21 guides the coupled auxiliary higher-order transverse electric mode (e.g. TE₂₀) towards the first high index contrast routing waveguide 31, which is straight or tapered or bent (curved).
   6. The first high index contrast routing waveguide 31 is connected to a second high index contrast routing waveguide 31 for width matching.
   7. The second high index contrast routing waveguide 31 is connected to a third high index contrast routing waveguide 31.
   8. The third high index contrast routing waveguide 31 is parallel to a fourth high index contrast routing waveguide 31 at the same photonic layer 6, both high index contrast routing waveguides 31 form a high index contrast routing directional coupler 4, may have the same or different heights and may be straight or tapered or bent.
   9. The auxiliary higher-order transverse electric mode (e.g. TE₂₀) propagates from the first via the second towards the third high index contrast routing waveguide 31. Within the routing directional coupler 4, the auxiliary higher-order transverse electric mode (e.g. TE₂₀) in the third high index contrast routing waveguide 31 is matched and evanescently coupled to a target fundamental transverse electric mode (e.g TE₀₀) within the fourth high index contrast routing waveguide 31.
   10. The target fundamental transverse electric mode (e.g. TE₀₀) propagates within the fourth high index contrast routing waveguide 31 towards further parts of the (E)PIC 11. The configuration can be operated in a reverse direction.
   The converter structure provides functionality for mode spot size adaptation and mode type conversion.
B. In another embodiment, a converter structure is configured as a horizontal integrated coupling interface within an (E)PIC 11 that receives light signal from a chip-external light source, the light signal having one polarization state, which is the y-polarization state. The structure and the functional steps are as follow:
   1. A vertical directional coupler 1, comprising one bulky low index contrast coupling section waveguide 22' and one high index contrast coupling section waveguide 21, which are vertically distanced and stacked over each other at different vertical photonic layers 6.
   2. The bulky low index contrast coupling section waveguide 22' is connected to a bulky low index contrast routing waveguide 32', which receives the external light signal via edge coupling, or the bulky low index contrast coupling section waveguide 22' receives the external light signal via evanescent coupling and is extended in its length to become a part of the vertical directional coupler 1.
   3. Within the vertical directional coupler 1, the bulky low index contrast coupling section waveguide 22' transfers the received light towards the high index contrast coupling section waveguide 21 via evanescent coupling.
   4. The high index contrast coupling section waveguide 21 is a part of a polarization branch 8 and is configured to receive the source y-polarized light in an auxiliary hybrid mode (e.g. TM₀₀/TE₁₀ ), which is different from the fundamental transverse electric mode (e.g. TE₀₀) and the fundamental transverse magnetic mode (e.g. TM₀₀) in this waveguide. This is enabled by mode matching between the source y-polarized mode and the auxiliary hybrid mode within the desired wavelength range (i.e. spectrum/bandwidth). The mode matching is ensured by choosing appropriate geometric dimensions of access sides A, B of the high index contrast coupling section waveguide 21.
   5. The high index contrast coupling section waveguide 21 is tapered to abandon the mode hybridization point and obtain only an auxiliary higher-order transverse electric mode (e.g. TE₁₀) at its end. The tapering also adjusts the coupled bandwidth.
   6. Access side B of the high index contrast coupling section waveguide 21 is connected to access side A' of a first high index contrast routing waveguide 31. The high index contrast coupling section waveguide 21 transports the coupled auxiliary higher-order transverse electric mode (e.g. TE₁₀) towards the first high index contrast routing waveguide 31, which is straight or tapered or bent (curved).
   7. The first high index contrast routing waveguide 31 is connected to a second high index contrast routing waveguide 31 for width matching.
   8. The second high index contrast routing waveguide 31 is connected to a third high index contrast routing waveguide 31.
   9. The third high index contrast routing waveguide 31 is parallel to a fourth high index contrast routing waveguide 31 at the same photonic layer 6, both high index contrast routing waveguides 31 form a high index contrast routing directional coupler 4, may have the same or different heights and may be straight or tapered or bent.
   10. The auxiliary higher-order transverse electric mode (e.g. TE₁₀) propagates from the first via the second towards the third high index contrast routing waveguide 31. Within the high index contrast routing directional coupler 4, the auxiliary higher-order transverse electric mode (e.g. TE₁₀) in the third high index contrast routing waveguide 31 is matched and evanescently coupled to a target fundamental transverse electric mode (e.g. TE₀₀) within the fourth high index contrast routing waveguide 31.
   11. The target fundamental transverse electric mode (e.g. TE₀₀) propagates within the fourth high index contrast routing waveguide 31 towards further parts of the (E)PIC 11. The configuration can be operated in a reverse direction.
   The converter structure provides functionality for mode spot size adaptation, mode type conversion and polarization rotation.
C. In another embodiment, a converter structure is configured as a horizontal integrated coupling interface within an (E)PIC 11 that receives light signal from a chip-external light source, the light signal having one polarization state, which is the y-polarization. The structure and the functional steps are as follow:
   1 ÷ 9 repeat the steps 1 ÷ 9 from embodiment B.
   10. The fourth high index contrast routing waveguide 31 is configured to operate in a hybridization point, supporting the propagation of an auxiliary hybrid mode (e.g. TM₀₀/TE₁₀).
   11. The auxiliary higher-order transverse electric mode (e.g. TE₁₀) propagates from the first via the second towards the third high index contrast routing waveguide 31. Within the high index contrast routing directional coupler 4, the auxiliary higher-order transverse electric mode (e.g. TE₁₀) in the thirs high index contrast routing waveguide 31 is matched and evanescently coupled to the auxiliary hybrid mode (e.g. TM₀₀/TE₁₀) within the fourth high index contrast routing waveguide 31.
   12. The fourth high index contrast routing waveguide 31 is tapered to abandon the hybridization point and obtain the fundamental transverse magnetic mode (e.g. TM₀₀) at the end. The fundamental transverse magnetic mode (e.g. TM₀₀) is the target mode.
   13. The target fundamental transverse magnetic mode (e.g. TM₀₀) propagates within the fourth high index contrast routing waveguide 31 towards further parts of the (E)PIC 11. The configuration can be operated in a reverse direction.
   The converter structure provides functionality for mode spot size adaptation, mode type conversion and polarization rotation.
D. In another embodiment, a converter structure is configured as a horizontal integrated coupling interface within an (E)PIC 11 that receives light signal from a chip-external light source, the light signal having one polarization state, which is the y-polarization. The structure and the functional steps are as follow:
   1. A vertical directional coupler 1, comprising one bulky low index contrast coupling section waveguide 22' and one high index contrast coupling section waveguide 21, which are vertically distanced and stacked over each other at different vertical photonic layers 6.
   2. The bulky low index contrast coupling section waveguide 22' is connected to a bulky low index contrast routing waveguide 32', which receives the external light signal via edge coupling, or the bulky low index contrast coupling section waveguide 22' receives the external light signal via evanescent coupling and is extended in its length to become a part of the vertical directional coupler 1.
   3. Within the vertical directional coupler 1, the bulky low index contrast coupling section waveguide 22' transfers the received light towards the high index contrast coupling section waveguide 21 via evanescent coupling.
   4. The high index contrast coupling section waveguide 21 has an asymmetric L-shaped cross-section and supports two auxiliary ± 45°- polarized hybrid modes. The high index contrast coupling section waveguide 21 is a part of a polarization branch 8, which is configured to receive the source y-polarized light into one of the auxiliary hybrid modes. This is enabled by mode matching between the source y-polarized mode and one of the auxiliary hybrid modes within the desired wavelength range (i.e. spectrum/bandwidth). The mode matching is ensured by choosing appropriate geometric dimensions of access sides A, B of the high index contrast coupling section waveguide 21.
   5. The high index contrast coupling section waveguide 21 is tapered to convert the auxiliary hybrid mode either into a target fundamental transverse electric mode (e.g. TE₀₀) or into a target fundamental transverse magnetic mode (e.g. TM₀₀) . The tapering adjusts the desired wavelength range of the light signal.
   6. Access side B of the high index contrast coupling section waveguide 21 is connected to access side A' of a first high index contrast routing waveguide 31, which guides said target mode to the remaining (E)PIC 11 parts. The configuration can be operated in a reverse direction.
   The converter structure provides functionality for mode spot size adaptation, mode type conversion and polarization rotation.
E. In another embodiment, a converter structure is configured as a horizontal integrated coupling interface for the connection of different vertical photonic layers 6 that receives light signal from a chip-internal light source, the light signal having one polarization state, which is the x-polarization or the y-polarization. The structure and the functional steps are as follow:
   1. A vertical directional coupler 1, comprising at least two coupling section waveguides 2 which are vertically distanced and stacked over each other at different vertical photonic layers 6.
   2. One of these coupling section waveguides 2 is connected to a routing waveguide 3, which is connected to one (E)PIC 11 delivering the source light signal.
   3. The said coupling section waveguide 2 guides the light further to the remaining one or more coupling section waveguides 2 within the vertical directional coupler 1 via evanescent coupling.
   4. One of the remaining coupling section waveguides 2 is a part of a polarization branch 8, which is configured to guide the received light signal towards a target (E)PIC 11 at a different vertical location compared to the source (E)PIC 11.
   5. If the source light signal is x-polarized, steps 4 ÷ 10 from embodiment A. are followed.
   6. If the source light signal is y-polarized, one of the following options may be followed: steps 4. ÷ 11. from embodiment B., steps 4 ÷ 13 from embodiment C., steps 4 ÷ 6 from embodiment D.
   The converter structure provides functionality for light transportation between different vertical photonic layers 6, mode type conversion and polarization rotation.
F. In another embodiment, the converter structure described in embodiment E. contains one source (E)PIC 11, connected to a high index contrast routing waveguide 31 at one vertical photonic layer 6 and one target (E)PIC 11 connected to another high index contrast routing waveguide 31 at a different vertical photonic layer 6. The two high index contrast routing waveguides 31 are connected to two high index contrast coupling section waveguides 21 within a vertical directional coupler 1. A bulky low index contrast coupling section waveguide 22' is sandwiched between the two high index contrast coupling section waveguides 21 within the vertical directional coupler 1. The bulky low index contrast coupling section waveguide 22' is an intermediate waveguide, which receives light evanescently from the first source high index contrast coupling section waveguide 21 and transfers the light further to the second target high index contrast coupling section waveguide 21. Depending on the polarization state of the source light signal, step 5. or 6. in embodiment E. is relevant.
G. In another embodiment, the source modes in embodiments A., B., C. may be chip-external and chip-internal, the target modes in embodiments A., B., C. may be different from the fundamental transverse electric mode (e.g. TE₀₀) or the fundamental transverse magnetic mode (e.g. TM₀₀) and may be substituted in the description, without changing the remaining content of the listed steps, which have to be followed.
H. In another embodiment, a converter structure is configured as a horizontal integrated coupling interface within an (E)PIC 11 that receives light signal from a chip-external light source, the light signal being composed of two orthogonal polarization states - an x-polarization and a y-polarization. The structure and the functional steps are as follow:
   1. A vertical directional coupler 1, comprising one bulky low index contrast coupling section waveguide 22' and two high index contrast coupling section waveguides 21, which are vertically distanced and stacked over each other at different vertical photonic layers 6.
   2. The bulky low index contrast coupling section waveguide 22' is connected to a bulky low index contrast routing waveguide 32', which receives the external light signal via edge coupling, or the bulky low index contrast coupling section waveguide 22' receives the external light signal via evanescent coupling and is extended in its length to become a part of the vertical directional coupler 1.
   3. The two high index contrast coupling section waveguides 21 are a part of two different polarization branches 8 - one dedicated for incident x-polarization (x-polarization branch 81) and one for incident y-polarization (y-polarization branch 82).
   4. The two high index contrast coupling section waveguides 21 and the two polarization branches 8 are spatially separated and are:
      - either placed in sequence and located at the same photonic layer 6, defined at the same vertical positions, or
      - are placed in sequence and located at different photonic layers 6, defined at different vertical positions, or
      - are placed in parallel and located at the same photonic layer 6, defined at the same vertical position, or
      - are placed in parallel and located at different photonic layers 6, defined at different vertical positions.
   5. The x- and y-polarization branches 81, 82 are configured to operate in different operating points, namely:
      a. The high index contrast coupling section waveguide 21, which is a part of an x-polarization branch 81, is configured to receive the source x-polarized light in a fundamental transverse electric mode (e.g. TE₀₀) . This is enabled by mode matching between the source x-polarized mode and the fundamental transverse electric mode (e.g. TE₀₀) within the desired wavelength range (i.e. spectrum/bandwidth). The mode matching is ensured by choosing appropriate geometric dimensions of access sides A, B of the high index contrast coupling section waveguide 21. The high index contrast coupling section waveguide 21 may be tapered to extend the coupled bandwidth.
         The high index contrast coupling section waveguide 21, which is a part of a y-polarization branch 82, is configured to receive the source y-polarized light in an auxiliary hybrid mode (e.g. TM₀₀/TE₁₀), which is different from the fundamental transverse electric mode (e.g. TE₀₀) and the fundamental transverse magnetic mode (e.g. TM₀₀) in this waveguide. This is enabled by mode matching between the source y-polarized mode and the auxiliary hybrid mode within the desired wavelength range (i.e. spectrum/bandwidth). The mode matching is ensured by choosing appropriate geometric dimensions of access sides A, B of the high index contrast coupling section waveguide 21. The high index contrast coupling section waveguide 21 in the y-polarization branch 82 is tapered to abandon the mode hybridization point and obtain only an auxiliary higher-order transverse electric mode (e.g. TE₁₀) at its end. The tapering also adjusts the coupled bandwidth; or
      b. The high index contrast coupling section waveguide 21, which is a part of an x-polarization branch 81, is configured to receive the source x-polarized light in an auxiliary higher-order transverse electric mode (e.g. TE₂₀) , which is different from the fundamental mode in this waveguide. This is enabled by mode matching between the source x-polarized mode and the auxiliary higher-order transverse electric mode within the desired wavelength range (i.e. spectrum/bandwidth). The high index contrast coupling section waveguide 21 may be tapered to extend the coupled bandwidth.
         The high index contrast coupling section waveguide 21, which is a part of a y-polarization branch 82, is configured as in step 5a; or
      c. The high index contrast coupling section waveguide 21, which is a part of an x-polarization branch 81, is configured as in step 5a.
         The high index contrast coupling section waveguide 21, which is a part of a y-polarization branch 82, has an asymmetric L-shaped cross-section supporting two auxiliary ± 45°-polarized hybrid modes, and is configured to receive the source y-polarized light into one of the auxiliary hybrid modes. This is enabled by mode matching between the source y-polarized mode and the said auxiliary hybrid mode within the desired wavelength range (i.e. spectrum/bandwidth). The mode matching is ensured by choosing appropriate geometric dimensions of access sides A, B of the high index contrast coupling section waveguide 21. The high index contrast coupling section waveguide 21 is tapered to convert the auxiliary hybrid mode into a target fundamental transverse electric mode (e.g. TE₀₀) in a large bandwidth; or
      d. The high index contrast coupling section waveguide 21, which is a part of an x-polarization branch 81, is configured as in step 5b.
      The high index contrast coupling section waveguide 21, which is a part of a y-polarization branch 82, is configured as in step 5c.
   6. The different combinations of operating points listed in point H. 5. prevent incident x-polarization from being efficiently coupled into a y-polarization 82 branch and incident y-polarization from being coupled into an x-polarization branch 81. Thus, undesired polarization mixing and crosstalk can be avoided.
   7. Depending on the particular polarization branch 8, the routing waveguides 3 are configured as follows:
      X-polarization branch 81 as in step H. 5a., 5c. - if the polarization branch 8 has the same height as the target (E)PIC 11, access side B of the high index contrast coupling section waveguide 21 in this polarization branch 8 is directly connected with access side A' of a high index contrast routing waveguide having 31 the same cross-section, which guides the light signal to the target (E)PIC 11. If the polarization branch 8 has a smaller height as the target (E)PIC 11, the high index contrast coupling section waveguide 21 guides the received fundamental transverse electric mode (e.g TE₀₀) towards a first high index contrast routing waveguide 31 with the same cross-section dimensions, which is straight or tapered or bent (curved). The first high index contrast routing waveguide 31 is followed by a second tapered high index contrast routing waveguide 31 to enlarge the width of its cross-section. The second high index contrast routing waveguide 31 is connected at its wider side to a third high index contrast routing waveguide 31, which is formed as a rib waveguide having a desired total width. The rib height is equal to the target height. The rib core is gradually tapered in its width, so that its slabs become smaller towards the end of the third high index contrast routing waveguide 31 - at the end, a nanowire results, whose height is equal to the target height. The rib tapering is done in a way to preserve the fundamental transverse electric mode (e.g. TE₀₀) . The third high index contrast routing waveguide 31 transfers the fundamental transverse electric mode (e.g. TE₀₀) further towards the target (E)PIC 11. Lastly, if the polarization branch 8 has a smaller height as the target (E)PIC 11, the height adaptation may be done in an equivalent way as in embodiment A 5. ÷ 10., wherein within the steps' description the higher-order transverse electric mode (e.g. TE₂₀) will be substituted by the fundamental transverse electric mode (e.g. TE₀₀).
      Y-polarization as in 5a., 5c. - the same steps are applied as in embodiment B 6. ÷ 11.
      X-polarization as in 5b., 5d. - the same steps are applied as in embodiment A 5. ÷ 10.
      Y-polarization as in 5b., 5d. - the same steps are applied as in embodiment D 5. ÷ 6.

The converter structure provides functionality for mode spot size adaptation, mode type conversion, polarization rotation and polarization splitting.

The provided exemplary embodiments make use of auxiliary higher-order transverse electric modes. Depending on the waveguide type (i.e. waveguide materials, geometry, operating wavelength, etc.) other auxiliary higher-order modes, different from the fundamental modes in this waveguide, may be used.

### List of reference signs:

- Chip 100
- Vertical directional coupler 1
- Coupling section waveguide 2
   o High index contrast coupling section waveguide 21
   o Low index contrast coupling section waveguide 22 (not shown)
      - Bulky low index contrast coupling section waveguide 22'
- Routing waveguide 3
   o High index contrast routing waveguide 31
   o Low index contrast routing waveguide 32 (not shown)
      ▪ Bulky low index contrast coupling section waveguide 32'
- Routing directional coupler 4
- First access side of a coupling section waveguide A
- Second access side of a coupling section waveguide B
- First access side of a routing waveguide A'
- Second access side of a routing waveguide B'
- Double-tip taper 5
- Photonic layer 6
   o High (refractive) index contrast photonic layer 61
   o Low (refractive) index contrast photonic layer 62
- Chip-external light transmitting/receiving unit 7
   o Section of connection of external arbitrary polarizations/modes 71
- Polarization branch 8
   o X-polarization branch 81
   o Y-polarization branch 82
- Fundamental transverse electric mode guiding section 9
   o Higher-order transverse electric mode guiding section 9'
- Fundamental transverse magnetic mode guiding section 10
   o Hybrid mode guiding section 10'
- (E)PIC - (electronic) photonic integrated circuit) 11

Although the present invention has been described in connection with the preferred exemplary embodiments, it should be noted that other variations of exemplary embodiments are possible, obvious to those skilled in the art, which will achieve the desired effects by the features disclosed in the present description and claims which do not depart from the scope of the present invention as defined by the claims.

## Claims

1. A converter structure, configured for horizontal coupling of light, comprising a vertical directional coupler (1), comprising at least two coupling section waveguides (2), which are spatially distanced from each other, and vertically stacked over each other, also are coupled with each other via evanescent fields, wherein said vertical directional coupler (1) is connected to at least one routing waveguide (3), wherein each coupling section waveguide (2) has a core and a first access side (A), which is opposed to a second access side (B), and each routing waveguide (3) has a core and a first access side (A'), which is opposed to a second access side (B'),
**characterized in that** said vertical directional coupler (1) has one or more polarization branches (8), each formed by one of the coupling section waveguides (2) within the vertical directional coupler (1) and the at least one routing waveguides (3) connected to said coupling section waveguide (2), wherein the other coupling section waveguides (2) are configured to deliver light with optical power to said one or more polarization branches (8),
wherein the converter structure is configured for mode type conversion assisted by the use of auxiliary higher-order modes and/or auxiliary hybrid modes different from fundamental modes within one coupling section waveguide (2) of at least one polarization branch (8), wherein the one or more polarization branches (8) are configured for direct or indirect coupling of x-polarization state and/or y-polarization state, wherein a source x-polarized mode is connected to a target x-polarized or y-polarized mode and/or a source y-polarized mode is connected to a target x-polarized or y-polarized mode,
wherein the converter structure is configured for spot size conversion by the use of auxiliary higher-order modes and/or auxiliary hybrid modes different from fundamental modes within a coupling section waveguide (2) of at least one polarization branch (8), wherein each coupling section waveguide (2) is a high refractive index contrast coupling section waveguide (21) or a low refractive index contrast coupling section waveguide (22), and each routing waveguide (3) is a high refractive index contrast routing waveguide (31) or a low refractive index contrast routing waveguide (32), wherein routing waveguides (3) and coupling section waveguides (2), which are directly connected with each other, have the same refractive index contrast.

2. A converter structure according to claim 1, **characterized in that** the mode type conversion is a polarization rotation assisted by the use of auxiliary hybrid modes different from fundamental modes within a coupling section waveguide (2) of at least one polarization branch (8), wherein a source x-polarized mode is connected to a target y-polarized mode and/or a source y-polarized mode is connected to a target x-polarized mode.

3. A converter structure according to claims 1 and 2, **characterized in that** the vertical directional coupler (1) is connected to a group of at least two subsequently arranged routing waveguides (3), wherein the configuration of the subsequent routing waveguides (3) is either configured to have the same height and to follow each other in sequence; or two or more of the subsequent routing waveguides (3) with equal or different height are configured to form a routing directional coupler (4); or two or more of the subsequent routing waveguides (3) are configured to have different heights and to follow each other in sequence.

4. A converter structure according to any of claims 1 -3, **characterized in that** the vertical directional coupler (1) has two or more polarization branches (8).

5. A converter structure according to any of claims 1-4, **characterized in that** at least one coupling section waveguide (2) and at least one routing waveguide (3) are tapered for broadband matching between the source modes and the auxiliary higher-order modes or the auxiliary hybrid modes and between the target modes and the auxiliary higher-order modes or the auxiliary hybrid modes.

6. A converter structure according to any of claims 1-5, **characterized in that**
- at least one of the access sides (A, B) of one coupling section waveguide (2) has equal or different dimensions with at least one of the access sides (A, B) of an adjacent coupling section waveguide (2),
- wherein at least one coupling section waveguide (2) is a high refractive index contrast waveguide (21) and at least one another coupling section waveguide (2) is a bulky low refractive index contrast coupling section waveguide (22'),
- wherein the bulky low refractive index contrast coupling section waveguide (22') has a core cross-section area, which is at least one order of magnitude larger than the core cross-section area of one of said at least one high refractive index contrast coupling section waveguide (21),
- wherein the mode spot size conversion is between waveguides with different dimensions.

7. A converter structure according to any of the preceding claims, **characterized in that** at least one bulky low refractive index contrast coupling section waveguide (22') is placed below and/or above a high refractive index contrast coupling section waveguide (21).

8. A converter structure according to any of the preceding claims, **characterized in that** a polarization branch (8) configured for the coupling of an x-polarized source mode comprises at least one coupling section waveguide (2) within the vertical directional coupler (1), which is tapered to receive a source x-polarized mode into a line of at least one auxiliary higher-order transverse electric mode, wherein the latter in the line auxiliary higher-order transverse electric mode is converted into a target x-polarized fundamental transverse electric mode by the use of at least one routing waveguide (3).

9. A converter structure according to any of the preceding claims, **characterized in that** a polarization branch (8) configured for the coupling of an y-polarized source mode comprises at least one coupling section waveguide (2) within the vertical directional coupler (1), which is tapered around a mode hybridization point between a y-polarized fundamental transverse magnetic mode and an x-polarized auxiliary higher-order transverse electric mode, and in said hybridization point simultaneously the source y-polarized mode is coupled and rotated and converted into the x-polarized auxiliary higher-order transverse electric mode.

10. A converter structure according to any of the preceding claims, **characterized in that** it is configured for polarization splitting by the spatial separation in different polarization branches (8) and by the use of different operating points within each polarization branch (8) for all polarization states, which are coupled to the converter structure.

11. A converter structure according to any of the preceding claims, **characterized in that** it is integrated in a chip (100) as a horizontal integrated coupling interface, and is a part of an integrated photonic or electronic-photonic integrated circuit.

12. A converter structure according to claim 11, **characterized in that** the light of the external light source is composed of up to two orthogonal polarization states, wherein photonic layers (6), comprising coupling section waveguides (2) of vertical directional coupler (1) or a combination of coupling section waveguides (2) of vertical directional coupler (1) and routing waveguides (3) are arranged in different vertical layers, beginning at different vertical locations, either in the frontend of line of the chip (100) or in the backend of line of the chip (100), wherein mode spot size conversion and polarization splitting is obtained from:
- coupling of x- and y-polarization states into two polarization branches (8) placed in sequence at the same photonic layer (6) or at different vertical photonic layers (6), or
- coupling of x- and y-polarization states into two parallel polarization branches (8) at the same photonic layer (6), or
- coupling of x- and y-polarization states into two parallel polarization branches (8) at different vertical photonic layers (6).

13. A converter structure according to any of claims 11 and 12, **characterized in that** a tapered high refractive index contrast coupling section waveguide (21) within the vertical directional coupler (1), which is configured to transport an auxiliary higher-order mode, is connected to a first high refractive index contrast routing waveguide (31), which is straight or tapered or bent,
- wherein the first high refractive index contrast routing waveguide (31) is followed by a second high refractive index contrast routing waveguide (31), which is tapered, for width adaptation,
- wherein a third high refractive index contrast routing waveguide (31) follows the second high refractive index contrast routing waveguide (31), which third high refractive index contrast routing waveguide (31) having equal or different width compared to the first high refractive index contrast routing waveguide (31),
- wherein the third high refractive index contrast routing waveguide (31) is placed in parallel to a fourth high refractive index contrast routing waveguide (31),
- wherein the third and the fourth high refractive index contrast routing waveguides (31) form a routing directional coupler (4) for height and/or mode transformation,
- wherein the auxiliary higher-order mode from the third high refractive index contrast routing waveguide (31) is matched and evanescently coupled and transferred to a target fundamental transverse electric mode in the fourth high refractive index contrast routing waveguide (31),
- wherein the fourth high refractive index contrast waveguide (31) is connected to an electronic-photonic or photonic integrated circuit.

14. A method for horizontal coupling of waveguides using a converter structure as described in claims 1-13, having the following steps:
- a light source provides light with optical power, which has either a fixed polarization state or is composed of two orthogonal polarization states, wherein light with different polarization states is separated and coupled in different polarization branches (8) having different operating points to achieve polarization splitting;
- said light with optical power is transferred directly or indirectly using an auxiliary medium or structure for light guiding and/or light deflection towards the edge or parallel to the surface of a chip (100) with integrated photonic or electronic-photonic integrated circuit, containing the converter structure having vertical directional coupler (1), formed by coupling section waveguides, and connected to routing waveguides (3) for forming one or more polarization branches (8), by leading the external light with optical power through a low index contrast coupling section waveguide (22) to one or more high or low index contrast coupling section waveguides (21, 22) or through a high index contrast coupling section waveguide (22) to one or more high or low index contrast coupling section waveguides (21, 22) in the vertical directional coupler (1) located within photonic layers (6) at a lower and/or higher vertical position, wherein the light with optical power is transferred through one or more auxiliary higher-order modes and/or auxiliary hybrid modes between a source mode and a target mode, wherein mode matching is ensured for all wavelengths within the target spectrum.

15. A method for horizontal coupling of light waveguides according to claim 14, **characterized in that** the light with optical power is transferred using a mode hybridization point within the spot size converting structure, wherein a source y-polarization is simultaneously coupled to an auxiliary hybrid mode between a fundamental transverse magnetic mode and an auxiliary higher-order transverse electric mode and rotated and converted into a target x-polarized fundamental transverse electric mode and/or the light with optical power is transferred through one or more auxiliary higher-order transverse electric modes between a source x-polarized mode and a target x-polarized fundamental transverse electric mode.
